# EUROPEAN PATENT APPLICATION

(11) **EP 1 168 214 A1**
(43) Date of publication of application: **02.01.2002**
(21) Application number: 01115303.8
(22) Date of filing: 25.06.2001
(51) Int. Cl.: G06F 17/60

(54) **Methods and systems for proposing plans**

(30) Priority: 23.06.2000 JP 2000188581
(71) Applicant: YAMAHA HATSUDOKI KABUSHIKI KAISHA, Iwata-shi Shizuoka-ken (JP)
(72) Inventor: Kamiya, Tsuyoshi, Iwata-shi, Shizuoka-ken (JP); Mochizuki, Hirofumi, Iwata-shi, Shizuoka-ken (JP); Moromoto, Hiroyuki, Iwata-shi, Shizuoka-ken (JP); Yokota, Takashi, Iwata-shi, Shizuoka-ken (JP); Yamazaki, Akihiro, Iwata-shi, Shizuoka-ken (JP); Ishioka, Kazutoshi, Iwata-shi, Shizuoka-ken (JP)
(74) Representative: Grünecker, Kinkeldey, Stockmair & Schwanhäusser Anwaltssozietät

(57) **Abstract**

The invention provides a travel planning system that, in planning travel, enhances serviceability and variety of search subjects. The invention comprises a planning terminal. The planning terminal includes a planning database where information concerning a plurality of travel destinations is stored relating to a plurality of different kinds of search subjects. The planning terminal searches the search subjects in the planning database based on search keys received, depending on the kinds of the search subjects corresponding to the received search keys, searches information concerning travel destinations corresponding to the search subjects related to the search keys, and makes a travel plan which an intending travel thinks is most suitable based on the searched information. When present time reaches scheduled time in a travel plan, the planning terminal transmits to a portable terminal guide information on a scheduled place to corresponding to the scheduled time.

## Description

The present invention relates to a method for making a plan, a planning system for retrieving predetermined planning element information, a travel supporting system and a travel planning method for proposing travel plans.

In the past, there has been a system as a travel destination search system that connects an intending traveler terminal, through a network, with a travel destination information search terminal where information that corresponds to a search keyword from information concerning a plurality of travel destinations is searched.

The intending traveler terminal has a search key input where search key words are input and sent to the travel destination information search terminal.

The travel destination information search terminal has a travel destination information memory unit and a travel destination information search unit. The travel destination information memory unit memorizes information concerning a plurality of travel destinations which is related to their search words, and the travel destination information search unit searches the search words of the travel destination information memory unit based on different keywords. The travel destination information found in the travel destination information search unit is sent to the intending traveler terminal. When the travel destination information search unit receives a search keyword, it retrieves a search word of the travel destination information memory unit based on the received search keyword, and finds out travel destination information that is associated with the search word corresponding to the search keyword.

There is-another system where information on a plurality of travel destinations is stored associated with site information and an intending traveler enters desired travel destinations from a map displayed based on map information. A travel destinations information search terminal finds out site information of a travel destinations information memory unit based on the entered site information, and retrieves information about travel destinations corresponding to the site information.

The search systems regarding travel destination information are provided on home pages. The typical example of the home pages is "http://travel.mimo.com/" designated by the URL.

The search systems in prior art can discover travel destination information that is associated with a search object corresponding to each of the search keys based on search keys such as search keywords or site information.

However, when process through which an intending traveler decides a travel plan is studied in detail, the traveler considers search results by search keywords, search results by site information and so on by the time he/she decide a final travel plan, and then judges from various aspects. In most cases, it may be said that integrating the search results and other situations in the traveler's mind and detecting something common in them, the traveler finally decides a travel plan that he/she thinks will be effective and enjoyable. Accordingly, in the search systems regarding travel destination information in the prior art, there is a problem that a lot of room is left for the traveler to decide and enough support has not provided in deciding a travel plan.

Since travel destination information is supposed to be discovered that is associated with search words corresponding to search keywords, when a concept of travel is decided beforehand, all that should be done is to enter search keywords suitable for the concept. However, when a concept of travel is not decided at all, it is not known what kind of search keys should be entered and it is difficult to effectively conduct a search.

Since a search object, related to travel destination information of a travel destination information memory unit, is generally added by a manager (for example, a travel agency) of a travel destination information search terminal, there is a certain limitation on the variety of the search object. There is a problem that search cannot be conducted from various aspects. That is, a search with various aspects can be made when one piece of travel destination information corresponds to many search words than to one search word.

The similar problems are raised not only when travel plans are decided but also when planning with respect to goods or service is made.

The search systems in the prior art, on the other hand, propose at best information that will decide a travel plan to an intending traveler, but do not support the traveler who actually travels.

Thus, there is a need to solve the problems in the prior art.

It is an objective of the present invention to provide a method for making a plan, a planning system for retrieving predetermined planning element information, a travel supporting system and a travel planning method for proposing travel plans assisting development of plans and/or assisting users.

According to a first aspect of the present invention, said objective is solved by a method for making a plan having the features of claim 1.

According to a second aspect of the present invention, said objective is solved by a planning system for retrieving predetermined planning element information having the features of claim 9.

According to a third aspect of the present invention, said objective is solved by a travel supporting system having the features of claim 15.

According to a fourth aspect of the present invention, said objective is solved by travel planning method for proposing travel plans having the features of claim 17.

Preferred embodiments are laid down in the respective subclaims.

The planning system, travel planning system and method, and travel supporting system satisfies the need.

In an embodiment, the method for assisting a user to make a plan, comprising the steps of: (a) grouping subject information into categories, said subject information containing multiple planning elements; (b) extracting profile parameters from each planning element of the subject information, and storing the profile parameters in a memory, said profile parameters being configured to identify planning elements in each category; (c) selecting by a user a category from the categories; (d) selecting by the user a search key in the selected category; (e) retrieving planning elements, if any, from the memory by comparing the profile parameters of the planning elements in the memory with the search key, wherein predetermined values of the profile parameters are assigned to the search key; (f) displaying to the user the retrieved planning elements; (g) repeating steps (d) through (f), and optionally step (c), until the user is satisfied with the retrieved planning elements; (h) coordinating the retrieved planning elements to suggest a plan; (i) displaying the suggested plan to the user; and (j) repeating steps (g) through (i) until the user is satisfied with the suggested plan. According to the above, because the profile parameters mediate the search key and the planning elements in the memory, even if vague terms are inputted, relevant planning elements can be retrieved, and through interaction between a user and the system, the search can converge to provide a satisfactory plan to the user.

In the above, in an embodiment, step (f) further comprises selecting at least one planning element as a candidate, and in step (d) during step (g), the profile parameters of the candidate are used as the search key.

In the above, in an embodiment, the categories include an image profile, a sound profile, a configuration profile, a geographical profile, and a motivation profile. However, for a simple search and planing, categorization may not be required. In that case, a method comprises the steps of: (i) extracting profile parameters from each planning element of the subject information data, and storing the profile parameters in a memory, said profile parameters being configured to identify planning elements; (ii) selecting by a user a search key; (iii) retrieving planning elements, if any, from the memory by comparing the profile parameters of the planning elements in the memory with the search key, wherein predetermined values of the profile parameters are assigned to the search key; (iv) displaying to the user the retrieved planning elements; (v) repeating steps (ii) through (iv) until the user is satisfied with the retrieved planning elements; (vi) coordinating the retrieved planning elements to suggest a plan; (vii) displaying the suggested plan to the user; and (viii) repeating steps (v) through (vii) until the user is satisfied with the suggested plan.

In the above, the memory can be linked to an external database, and further, the memory can be updated based on the outcome of the user's exercising the suggested plan. The Internet connection can be used effectively.

In an embodiment, the plan is a travel plan, and the planning elements include at least one selected from the group consisting of scenic photographs, landmarks, weathers, activities, and sound features, all of which are associated with geographical information.

In an embodiment, the planning system retrieves predetermined planning element information associated with given search keys from planning element information constituting elements in making plans and proposes plans to an intending planner. The planning system comprises a planning element information memory device for storing the planning element information that is associated with a plurality of different kinds of search subjects; a search key input device for entering the search keys; a planning element information retrieval device for retrieving the search subjects in the planning element information memory device based on the search keys entered in the search key input device; and a planning device for making plans most suitable for the intending planner based on the planning element information retrieved by the planning element information retrieval device, wherein the planning element information retrieval device retrieves the search subjects in the planning element information memory device according to the kinds of the search subjects corresponding to the search keys entered at the search key input device, and derives planning element information corresponding to the search subjects related with the search keys.

According to the embodiment, the travel planning system that retrieves predetermined travel destination information associated with given search keys from travel destination information on travel destinations and proposes travel plans to an intending traveler. The travel planning system comprises a travel destination information memory device for storing the travel destination information that is associated with a plurality of different kinds of search subjects; a search key input device for entering the search keys; a travel destination information retrieval device for retrieving the search subjects in the travel destination information memory device based on the search keys entered in the search key input device; and a travel planning device for making travel plans most suitable for the intending traveler based on the travel destination information retrieved by the travel destination information retrieval device, wherein the travel destination information retrieval device retrieves the search subjects in the travel destination information memory device according to the kinds of the search subjects corresponding to the search keys entered at the search key input device, and derives travel destination information corresponding to the search subjects related with the search keys.

According to the embodiment, a travel supporting system is communicably connected to a portable terminal that supports travel by an intending traveler. The travel supporting system comprises a travel planning device for making a travel plan; and a travel supporting device for supporting the travel by the intending traveler that follows the travel plan made by the travel planning device, wherein the travel supporting device transmits to the portable terminal guide information on a schedule for the intending traveler based on the travel plan.

An embodiment relates to a travel planning method for proposing travel plans to an intending traveler wherein an intending traveler terminal for use by the intending traveler is communicably connected to a travel destination information search terminal that retrieves predetermined travel destination information associated with search keys from travel destination information on travel destinations. The travel planning method comprises entering the search keys through a search key input device; transmitting the search keys entered to the travel destination information search terminal by the intending traveler terminal, wherein the travel destination information search terminal includes: a travel destination information memory device for storing the travel destination information that is associated with a plurality of different kinds of search subjects; a travel destination information retrieval device for retrieving the search subjects in the travel destination information memory device based on the search keys; and a travel planning device for making travel plans most suitable for the intending traveler based on the travel destination information retrieved by the travel destination information retrieval device; making a travel plan by the travel planning device; transmitting the travel plan to the intending traveler terminal; retrieving the search subjects in the travel destination information memory device according to the kinds of the search subjects corresponding to the search keys that were received via the travel destination information retrieval device; and deriving travel destination information corresponding to the search subjects related with the search keys.

For purposes of summarizing the invention and the advantages achieved over the prior art, certain objects and advantages of the invention have been described above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

Further aspects, features and advantages of this invention will become apparent from the detailed description of the preferred embodiments which follow.

The present invention is illustrated and explained by means of preferred embodiments in conjunction with the accompanying drawings. In the drawing wherein:
- Figure 1: is a diagram showing an embodiment of the present invention;
- Figure 2: is a diagram showing a structure of a network system to which the invention applies;
- Figure 3: is a block diagram showing a structure of a planning terminal;
- Figure 4: is a flowchart showing a main process;
- Figure 5: is a flowchart showing a planning process;
- Figure 6: is a flowchart showing a sequence of making and processing a travel plan;
- Figure 7: is a flowchart showing an image search process;
- Figure 8: is a display screen showing a method of interactive communications with an intending traveler;
- Figure 9: is a flowchart showing an image search process;
- Figure 10: is a block diagram showing a structure of a portable terminal;
- Figure 11: is a flowchart showing an object making process;
- Figure 12: is a screen for inputting basic information displayed by an intending traveler terminal;
- Figure 13: is a screen for selecting searched pictures displayed by an intending traveler terminal;
- Figure 14: is a screen for selecting searched pictures displayed by an intending traveler terminal;
- Figure 15: is a screen for determining travel destinations displayed by an intending traveler terminal;
- Figure 16: is a screen for determining travel routes between areas displayed by an intending traveler terminal;
- Figure 17: is a screen for determining tourist spots displayed by an intending traveler terminal;
- Figure 18: is a screen for determining travel routes within areas displayed by an intending traveler terminal;
- Figure 19: is a screen displayed by an intending traveler terminal; and
- Figure 20: is a diagram showing a gradually increasing cycle of an object by an intending traveler.

The embodiments of the planning system, travel planning system and method, and travel supporting system, in accordance with the invention will be explained referring to the accompanied figures.

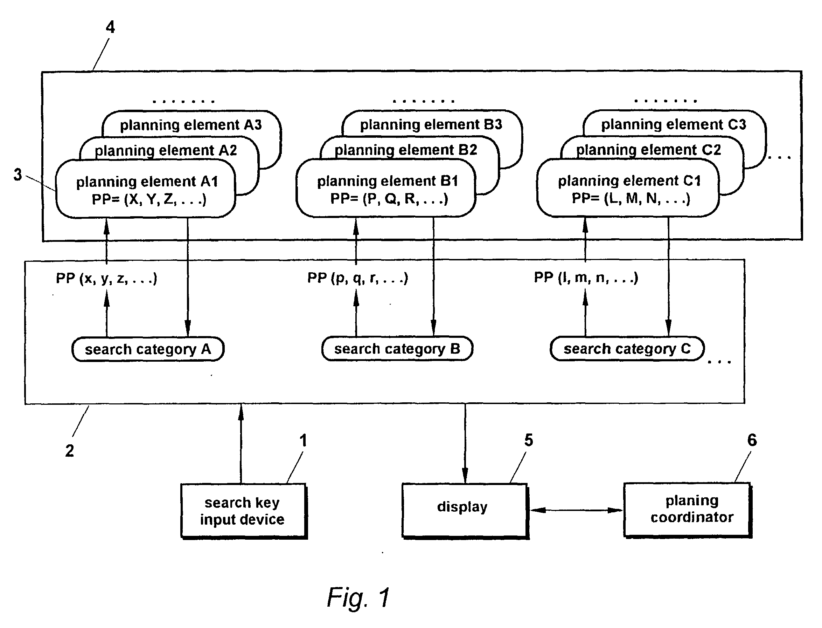

Figure 1 is a diagram showing an embodiment of the present invention. This figure shows a method for assisting a user to make a plan. The method comprises a step of (a) grouping subject information into categories (in this figure, the categories include categories A, B, and C). The subject information contains multiple planning elements 3 (in this figure, planning elements A1, A2, A3, etc. for category A, for example). The next step is (b) extracting profile parameters from each planning element of the subject information, and storing the profile parameters in a memory 4. The profile parameters are configured to identify planning elements in each category (in this figure, profile parameters are PP=(X, Y, Z, etc.), for example). The next step is (c) selecting by a user a category from categories A, B, C, etc. The user can use a search key input device 1. The next steps are (d) selecting by the user a search key in the selected category; and (e) retrieving planning elements 3, if any, from the memory 4 by comparing the profile parameters of the planning elements 3 in the memory 4 with the search key inputted through the search key input device 1. A retriever 2 is configured to accomplish the above. In the above, predetermined values of the profile parameters are assigned to the search key (in this figure, PP=(x, y, z, etc.), for example). For example, the planning elements may be scenic photographs, and the profile parameters may be color distributions (X1, ...), brightness distributions (Y1, ...), object types (Z1, ...), etc. The search key may be "snowy mountain" which has profile parameters of X1=1-10; Y1=1-10; Z1=1-10, etc., for example. All photographs having profile parameters within the ranges will be retrieved. The next step is (f) displaying to the user the retrieved planning elements on a display 5. The next step is (g) repeating steps (c) through (f), and optionally step (c), until the user is satisfied with the retrieved planning elements. In the above, step (f) further comprises selecting at least one planning element as a candidate, and in step (d) during step (g), the profile parameters of the candidate are used as the search key. For example, if the user selects one photograph showing a snowy mountain with ski facilities (e.g., X1=3, Y1=2, Z1=8) over photographs showing a snowy mountain only (e.g., X1=2, Y1=1, Z1=2), or a snowy mountain in the rain (e.g., X1=4, Y1=5, Z1=6), etc., the selected photograph can be used as a search key for a subsequent search. That is, the profile parameters (e.g., X1=3, Y1=2, Z1=8) are used for a subsequent search, and photographs having profile parameters of X1=3(1, Y1=2(1, Z1=8(1, etc., for example, will be retrieved. By repeating the above, the user can obtain satisfactory planning element(s). Instead of selecting a candidate, by changing the search key, a search can be accomplished, and further, the category can be changed if necessary. Multiple categories or multiple search keys can be used. Image searching techniques are described in Japanese patent application No. 2000-188580, filed June 23, 2000. The image searching techniques can be applied to other types of search.

The next steps are (h) coordinating the retrieved planning elements to suggest a plan by using a planning coordinator 6; (i) displaying the suggested plan to the user; and (j) repeating steps (g) through (i) until the user is satisfied with the suggested plan.

According to the above, because the profile parameters mediate the search key and the planning elements in the memory, even if vague terms are inputted, relevant planning elements can be retrieved, and through interaction between a user and the system, the search can converge to provide a satisfactory plan to the user.

If a search is simple, categorization need not be performed, and steps (a) and (c) can be omitted.

Other embodiments of the present invention will be explained below.

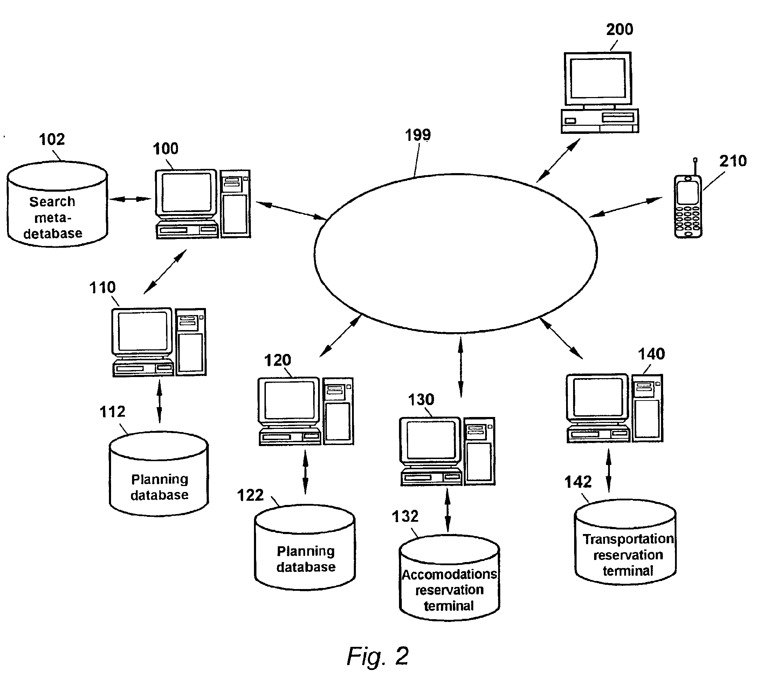

Figure 2 is a diagram showing a structure of a network system to which the invention applies. In the network system, in response to access from an intending traveler terminal 200, a planning terminal 100 finds out information concerning a travel destination (travel destination information) corresponding to a search subject from information concerning a plurality of travel destinations (plurality of travel destination information). The search object is suitable for an image of a search key picture or search key voice given as a search key by an intending traveler. Then a travel plan is proposed to the intending traveler.

Referring to Figure 2, the Internet 199 is connected to the planning terminal 100, a planning data search terminal 120, an accommodation reservation terminal 130 for reserving accommodations, a transportation reservation terminal 140 for reserving transportation, the intending traveler terminal 200 for intending travelers' use, and a portable terminal 210 for intending travelers' use.

The planning terminal 100 retrieves travel destination information associated with a search key from plurality of travel destination information. The planning terminal 100 is connected to a planning data search terminal 110 that has a planning database 112 storing plurality of travel destinations information associated with a plurality of different kinds of search objects. The planning data search terminal 120 discovers travel destinations information utilizing data other than the data the planning data search terminal 110 has. For easier understanding of the embodiment of the invention, only one intending traveler terminal 200 and one portable terminal 210 are shown in the figure. In fact, a plurality of intending traveler terminals 200 and portable terminals 210 are connected to the Internet 199.

The portable terminal 210 is connected to the Internet through a relay station (not shown). A relay station is connected to a plurality of base stations that communicates with the portable terminal 210 by radio. When the portable terminal 210 is connected to the Internet 199, a relay station becomes one terminal on the Internet 199 in place of the portable terminal 210. The relay station sends data the portable terminal 210 received through a base station to a desired terminal through the Internet 199, and transmits data from the desired terminal to the portable terminal 210 through the base station. The portable terminal 210 communicates simultaneously with at least three base stations. The relay station measures time taken for data from the portable terminal 210 to reach each base station, to derive each time difference from the measured time. Based on the time difference, the position of the portable terminal 210 is measured.

The planning data search terminal 110 is structured to have the same function as general computers where CPUs, ROMs, RAMs, and I/Fs are connected to buses. The planning data search terminal 110 has the planning database 112 that stores plurality of travel destination information relating to plurality of kinds of search objects. The planning data search terminal 110 retrieves the search objects of the planning database 112 according to the kinds of the search objects for given search keys, and discovers travel destination information corresponding to the search object suitable for an image of the search key. The search objects include basic information, search documents, search pictures, site information related to map information, search voice and search objects. The objects contain purposes, itineraries, transportation, and procedures of travel.

In conducting a keyword search, based on the search key word input as a search key, travel destination information is found out that corresponds to search documents suitable for an image of the search key word from the planning database 112. In doing a picture search, based on the search key picture input as a search key, travel destination information is retrieved that corresponds to search pictures suitable for an image of the search key picture from the planning database 112. With regard to a search by site information and voice, the same method can be employed.

The planning data search terminal 120 is structured to have the same function as general computers where CPUs, ROMs, RAMs, and I/Fs are connected to buses. The planning data search terminal 120 has the planning database 122 that stores plurality of travel destination information relating to search objects of other kinds than those of data the planning data search terminal 110 has. The planning data search terminal 120 retrieves the search objects of the planning database 122 according to the kinds of the search objects for given search keys, and discovers travel destination information corresponding to the search object suitable for an image of the search key. The planning data search terminal 120 is used supplementally, not independently, regarding search of travel destination information

The accommodations reservation terminal 130 is structured to have the same function as general computers where CPUs, ROMs, RAMs, and I/Fs are connected to buses. The accommodations reservation terminal 130 has an accommodations reservation database 132 that stores reservation information for accommodations, and processes the reservations for the accommodations based on the conditions of the accommodations. The specific structure is similar to a general reservation system.

The transportation reservation terminal 140 is structured to have the same function as general computers where CPUs, ROMs, RAMs, and I/Fs are connected to buses. The transportation reservation terminal 140 has a transportation reservation database 142 that stores reservation information as to transportation, and processes the transportation reservations based on the conditions of the transportation. The specific structure is similar to a general reservation system.

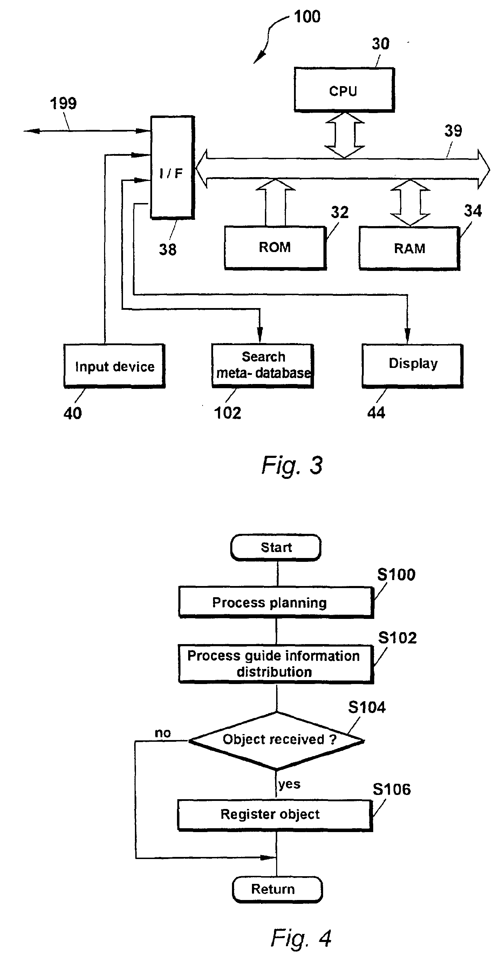

Figure 3 is a block diagram showing a structure of a planning terminal 100. The planning terminal 100 includes a CPU 30, a ROM 32, a RAM 34, and an I/F 38. The CPU 30 controls operations and an entire system based on control programs. The ROM 32 stores the control programs for the CPU 30 beforehand in a predetermined area. The RAM 34 stores data read out from the ROM 32 and data derived from operations by the CPU 30. The I/F 38 functions as a medium for sending and receiving data to and from external devices. All the devices (the CPU 30, ROM 32, RAM 34, and I/F 38) are mutually connected through a bus 39 for data transfer.

The I/F 38 is connected to an input device 40, a search meta-database 102, a display 44, and a signal line leading to the Internet 199. The input device 40 comprises a keyboard or mouse through which data can be entered as a human interface. The search meta-database 102 stores data or tables as files. The display 44 shows pictures based on picture signals.

The CPU 30 comprises a micro-processing unit (MPU), and activates specified programs stored in predetermined areas of the ROM 32. According to the programs, the flowcharts shown in Figures 4-7, and 9 are executed with time division.

Figure 4 is a flowchart showing a main process. Referring to the figure, the main process will be explained.

The main process is the one that shows an outline of the process for conducting travel planning and travel support. When executed by the CPU 30, the main process proceeds to step 100.

At step 100, a planning process is done such as registering users, building travel plans, making reservations for accommodations. After moving to step 102, when an intending traveler makes a trip based on the travel plan built in the planning process, processing guide information distribution is executed that distributes guide information to the intending traveler. Then the main process goes to step 104.

At step 104, it is decided whether or not an object made by the intending traveler is received. When decided that it is (Yes), the main process proceeds to step 106, where the received object is sent to the planning data search terminal 110 with a registration request to be registered into the planning database 112. The entire process is completed to return to the initial process.

If, at step 104, decided that it is not (No), the entire process is completed to return to the initial process.

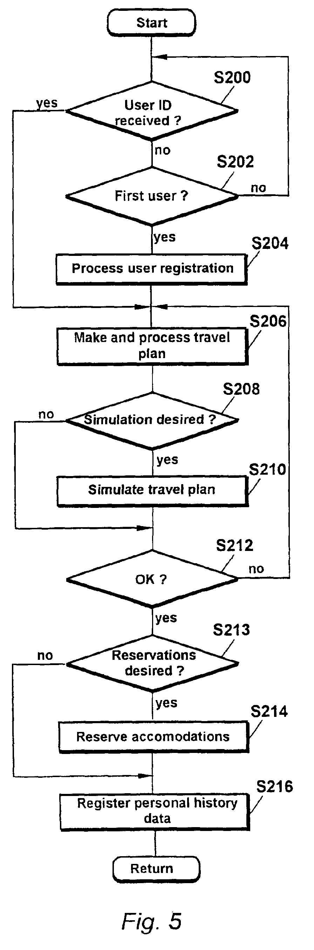

Figure 5 is a flowchart showing the planning process 100. The planning process 100 will be described in detail below.

The planning process is the one for planning a trip, and when executed by the CPU 30, moves to step 200.

At step 200, it is determined whether a user ID for identifying a intending traveler is received. When determined that it is not received (No), the process proceeds to step 202, where it is judged whether an input showing that the user is a first user is received. When judged that it is (Yes), the process goes to step 204 where a user registration process for registering a first user is conducted. At step 204, attributes of the user such as age, gender, occupation, and mail address of the portable terminal 210 are received for registration to be used for selection of information that is proposed preferentially. For example, if the user is in younger generation, busy locations such as amusement facilities are preferentially proposed as a candidate of a travel plan. If, on the other hand, the user is in older generation, quiet locations that are full of nature are preferentially proposed as a candidate.

At step 206, the travel plan making process for making a travel plan is performed. Then the process goes to step 208, where it is decided whether or not an input requesting that the travel plan made is simulated is received. When decided that it is (Yes), the process proceeds to step 210, where simulating the experiences that could be obtained when the travel plan is realized, the results of the simulation is sent to the intending traveler terminal 200. Then the process proceeds to step 212.

At step 212, it is decided whether or not an input showing that the travel plan made can be accepted is received. When decided that it is (Yes), the process goes to step 213 where it is determined whether or not an input expressing that reservations for accommodations and transportation necessary for the travel plan are desired is received. If determined that it is (Yes), the process proceeds to step 214.

At step 214, reservations for accommodations and transportation necessary for the travel plan are made using the accommodations reservation terminal 130 and the transportation reservation terminal 140. The process moves to step 216, where various conditions the intending traveler (user) has entered during making a travel plan and the travel plan made are registered in the search meta-database 102 as personal history data to make use of at a subsequent search. Then the process returns to the initial process. The personal history data registered at step 216 may be preferentially used for selection of data to be proposed as the user attributes that are registered. For example, if the intending traveler often designates the Tohoku Area as a candidate of a travel plan, places of interest in the Tohoku Area that have not been designated by the intending traveler, are preferentially proposed as a candidate at the subsequent searches.

On the other hand, if, at step 213, it is determined that an input expressing that reservations for accommodations and transportation necessary for the travel plan are not desired is received (No), the process goes to step 216.

At step 212, when it is decided that an input showing the travel plan made cannot be accepted is received (No), the process goes to step 206.

At step 208, when it is decided that an input requesting that the travel plan made is not simulated is received (No), the process goes to step 212.

At step 202, when it is judged that an input showing that the user is a first user is not received (No), the process goes to step 200.

At step 200, when it is determined that a user ID for identifying a intending traveler is received (Yes), the process proceeds to step 206.

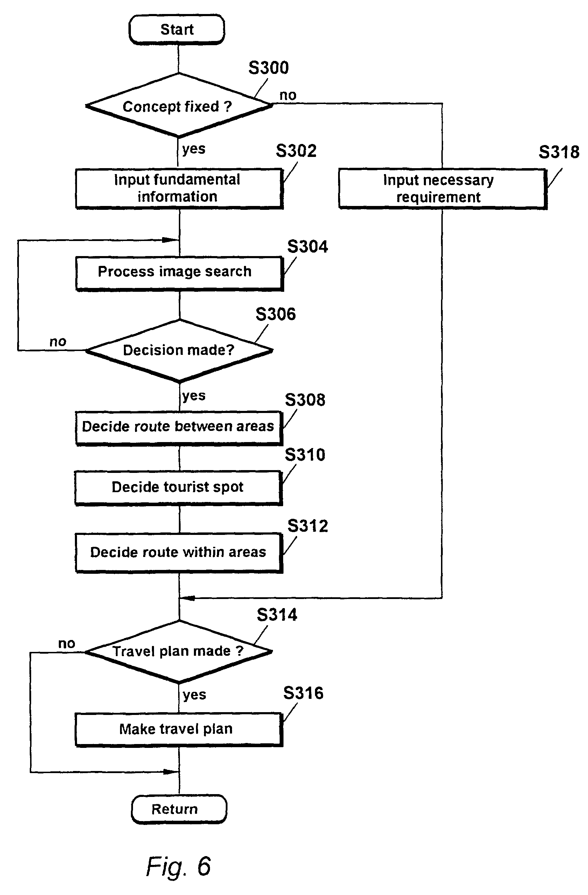

Figure 6 is a flowchart showing a sequence of making and processing a travel plan of step 206 above.

The process of making and processing a travel plan is the one where an image search using a plurality of search objects is conducted to draft a travel plan. When the process is executed by the CPU 30, the sequence goes to step 300 as shown in Figure 6.

At step 300, it is decided whether or not an input showing that the concept of a travel is fixed is received. When decided that an input showing that concept of a travel is not fixed is received (No), the sequence goes to step 302, where basic information concerning a departure place and either a domestic travel or a overseas travel is received. Then the sequence proceeds to step 304, where an image search process, in which an image search using a plurality of search objects is conducted, is executed. The sequence moves to step 306.

At step 306, it is decided whether or not an input showing that search results from the image search process are satisfactory is received. When decided that it is (Yes), the sequence proceeds to step 308, where a travel route in the areas (areas connecting each destination when there are plurality of destinations) between a departure place and a destination place is decided through an interactive communication with the intending traveler. The sequence goes to step 310, in which a tourist spot at a destination place (each destination place when there are a plurality of destination places) is determined decided through an interactive communication with the intending traveler. The sequence, then, goes to step 312, in which a travel route within an area (an area of each destination place when there are a plurality of destination places) of a destination place is determined through an interactive communication with the intending traveler. The sequence goes to step 314.

At step 314, it is determined whether an input meaning that a travel plan including a schedule is made is received. When determined that it is (Yes), the sequence goes to step 316, where based on the travel destination information retrieved in the image search process, the process of making a travel plan which the intending traveler think is most suitable is executed. After this, the sequence returns to the initial process.

At step 314, when it is determined that the input meaning that a travel plan is not made is received (No), the sequence returns to the initial process.

At step 306, When it is decided that an input showing that search results from the image search process are not satisfactory is received (No), the sequence proceeds to step 304.

At step 300, when it is decided that an input showing that the concept of a travel is fixed is received (Yes), the sequence goes to step 318, where the requirements necessary for drafting a travel plan are received. Then the sequence proceeds to step 314.

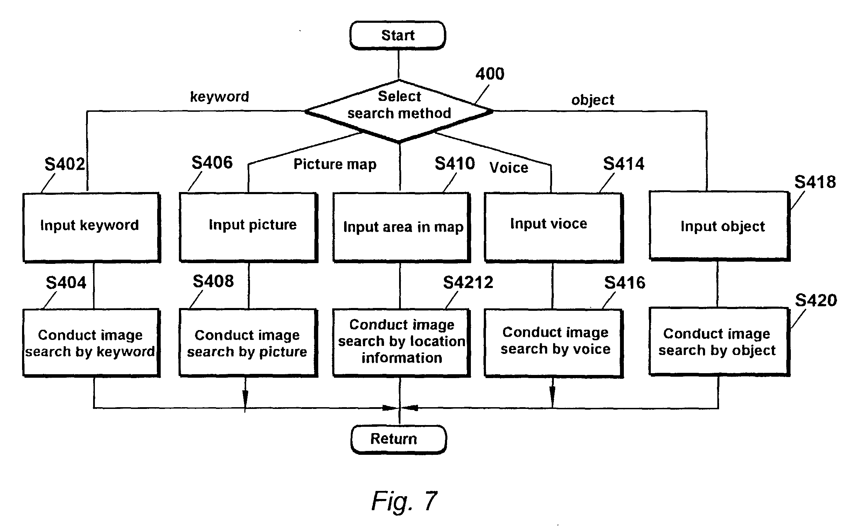

Figure 7 is a flowchart showing an image search process of step 304 above.

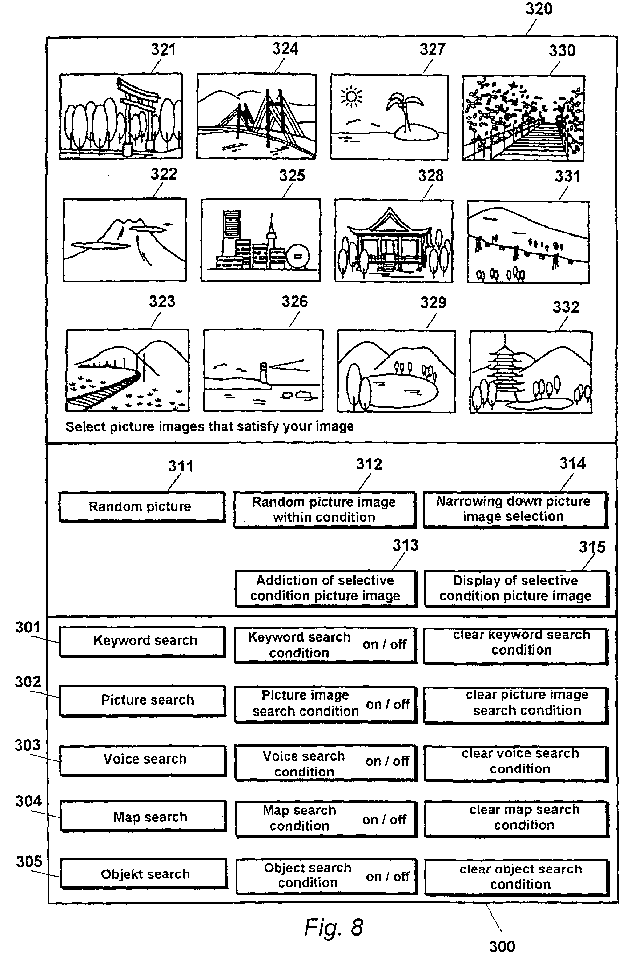

Figure 8 is a display screen showing a method of interactive communications with an intending traveler.

Referring to Figures 7 and 8, the image search process of step 304 will be explained below. The image search process is the process where an image search of travel destination information is conducted using a plurality of kinds of search objects such as a keyword, a picture image, a map, voice, and an object. When the image search process is done by the CPU 30, the sequence goes to step 400.

At step 400, when it is decided that a selection of a search method is received and that the received search method is an image search by a keyword, the sequence proceeds to step 402, in which a search keyword is received through an interactive communication with the intending traveler. Next, the sequence goes to step 404, where by sending the received search keyword to the planning data search terminal 110, a search document in the planning database 112 is retrieved according to the received search keyword. Travel destination information that corresponds to the search document suitable for an image of the search keyword is discovered, and the discovered travel destination information was received. Then, the entire process is complete and the sequence returns to the initial process.

The interactive communications with an intending traveler is conducted as follows. As shown in Figure 8, in a main menu window 300 displayed by the intending traveler terminal 200, when clicking an item button 301 called a "keyword search" by a mouse, a text box (not shown) is displayed. The intending traveler enters a keyword that he /she thinks is similar to his/her own image in the text box shown.

When, at step 400, it is decided that the received search method is an image search by a picture, the sequence goes to step 406 where a search picture is selected from the planning database 112 through an interactive communication with the intending traveler. The selected search picture is received as a search key picture. The sequence then moves to step 408, where by sending the received search key picture to the planning data search terminal 110, a search picture in the planning database 112 is retrieved based on the received search key picture. Travel destination information is found out that corresponds to the search picture suitable for an image of the search key picture. The travel destination information is received. Then, the entire process is complete and the sequence returns to the initial process.

The interactive communications with an intending traveler is conducted as follows. As shown in Figure 8, in the main menu window 300, when clicking an item button 302 called a "picture search" by a mouse, a plurality of item buttons 311-315 is displayed in a sub-menu window 310. When, for example, clicking the item button 311 called a "random picture", a plurality of searched pictures 321-332 are displayed in a picture display window 320. The intending traveler selects a search picture that is similar to his/he image of the searched pictures 321-332 in the picture display window 320.

On the other hand, when, at step 400, it is decided that the received search method is an image search by a map, the sequence goes to step 410, where map information is sent to the intending traveler terminal 200. Through an interactive communication with the intending traveler, a desired travel destination is narrowed down in the map displayed based on the map information. Location information, which shows the narrowed down travel destinations, is received as search key location information. The sequence goes to step 412, where by sending the received search key location information to the planning data search terminal 110, search location information in the planning database 112 is retrieved based on the received search key location information. Travel destination information is found out that corresponds to the search location information suitable for an image of the search key location information. The travel destination information is received. Then, the entire process is complete and the sequence returns to the initial process.

The interactive communications with an intending traveler is conducted in the following way. As shown in Figure 8, in the main menu window 300, when clicking an item button 304 called a "map search", a Japanese map (not shown) is displayed in the picture display window 320. The intending traveler designates a travel destination that is similar to his/her own image in the Japanese map shown in the picture display window 320.

When, at step 400, it is decided that the received search method is an image search by voice, the sequence goes to step 414, where a search voice is selected from the planning database 112 through an interactive communication with the intending traveler. The selected search voice is received as a search key voice. The sequence then moves to step 416, where by sending the received search key voice to the planning data search terminal 110, a search voice in the planning database 112 is retrieved based on the received search key voice. Travel destination information is found out that corresponds to the search voice suitable for an image of the search key voice. The travel destination information is received. Then, the entire process is complete and the sequence returns to the initial process.

The interactive communications with an intending traveler is conducted in the following way. As shown in Figure 8, in the main menu window 300, when clicking an item button 303 called a "voice search", a plurality of icons showing voice files (not shown) is displayed as a search voice in the picture display window 320. The intending traveler clicks an icon in the picture display window 320, and selects a search voice that is similar to his/her own image, listening to a voice in the voice files in the shown in the picture display window 320.

When, at step 400, it is decided that the received search method is an image search by object, the sequence goes to step 418, where a search object is selected from the planning database 112 through an interactive communication with the intending traveler. The selected search object is received as a search key object. The sequence then moves to step 420, where by sending the received search key object to the planning data search terminal 110, a search object in the planning database 112 is retrieved based on the received search key object. Travel destination information is found out that corresponds to the search object suitable for an image of the search key object. The travel destination information is received. Then, the entire process is complete and the sequence returns to the initial process.

The interactive communications with an intending traveler is conducted in the following way. As shown in Figure 8, in the main menu window 300, when clicking an item button 305 called a "object search", a plurality of search objects (not shown) is displayed in the picture display window 320. The intending traveler selects a search object that is similar to his/her own image in the objects shown in the picture display window 320.

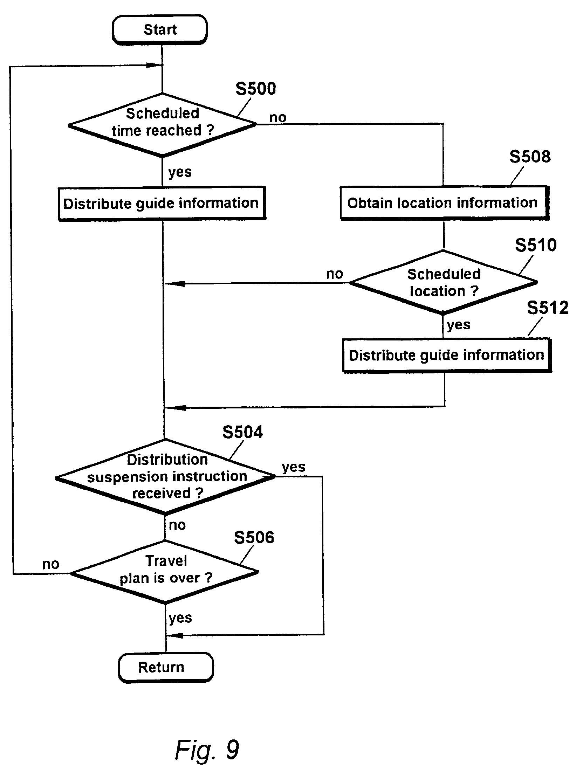

Figure 9 is a flowchart showing an image search process. The guide information distribution process of step 102 above will be explained in detail referring to Figure 9.

The guide information distribution process is the one where guide information is distributed to an intending traveler when the intending traveler travels following a travel plan drafted by a planning process. When executed by the CPU, the process proceeds to step 500 as shown in Figure 9.

At step 500, it is decided whether present time has reached scheduled time that is included in a travel plan drafted by the planning process. If decided that it has (Yes), the sequence goes to step 502, where guide information concerning a scheduled location corresponding to the scheduled time is distributed to the portable terminal 210 by e-mail. Then, the sequence moves to step 504, where it is determined whether or not a distribution suspension instruction is received. When determined that it is (Yes), the entire process is complete and the sequence returns to the initial process. When determined that it is not (No), the sequence goes to step 506.

At step 500, if it is decided that present time has not reached scheduled time (No), the sequence goes to step 508, where location information that represents the location of the portable terminal 210 is obtained from a relay station (unknown). Then, the sequence goes to step 510, where based on the obtained location information, it is decided whether or not a present location of the intending traveler is a scheduled location which is included in a travel plan by the planning process. When decided that it is (Yes), the sequence goes to step 512, where guide information concerning the scheduled time corresponding to the scheduled location is distributed to the portable terminal 210 by e-mail. Next, the sequence proceeds to step 504.

At step 506, it is decided whether or not the travel plan is over based on the scheduled time or present location of the intending traveler. When decided that it is (Yes), the entire process is complete and the sequence returns to the initial process. When decided that it is not (No), the sequence goes to step 500.

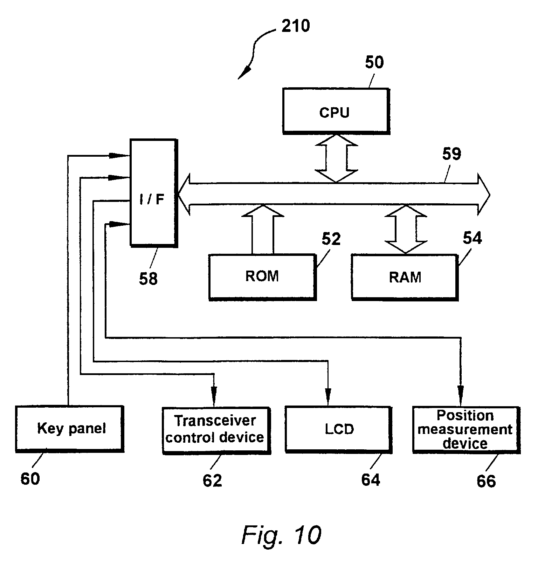

Figure 10 is a block diagram showing a structure of the portable terminal 210. Referring to Figure 10, the structure of the portable terminal 210 will be described in detail.

The portable terminal 210 comprises a CPU 50, a ROM 52, a RAM 54, and an I/F 58, all of which are mutually connected by a bus 59 that is a signal line for transmitting data. The CPU 50 controls operations and an entire system according to control programs. The ROM 52 beforehand stores control programs for the CPU 50. The RAM 54 stores data read out from the ROM 52 and operation results during an operation process by the CPU 50. The I/F 58 interfaces input and output of data toward external devices.

Connected with the I/F 58 are a key panel 60, a transceiver control device 62, a liquid crystal display (LCD) 64, and a position measurement device 66. The key panel 60, as a human interface, accepts data entered by a plurality of keys. The transceiver control device 62 communicates with a base station by radio. The LCD 64 displays picture signals on the screen. The position measurement device 66 measures the position of a present location.

The position measurement device 66, which utilizes a global positioning system (GPS), receives a time signal from a rotary satellite that shows present time and measures the position of a present location based on time difference shown by the time signal and a rotary orbit of each rotary satellite.

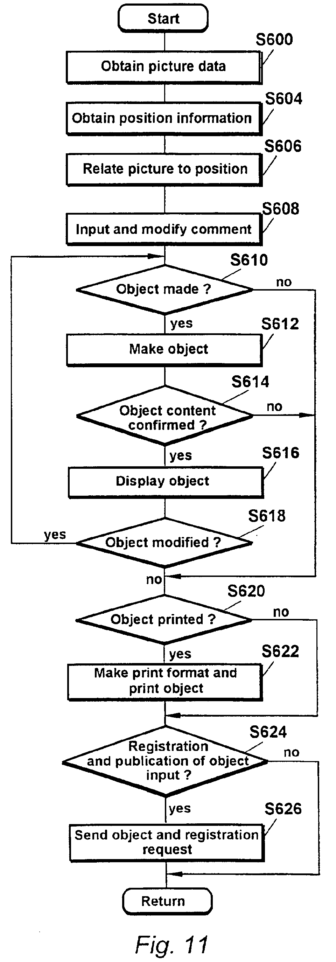

Figure 11 is a flowchart showing an object making process. The CPU 50 comprises a micro processing unit (MPU), and starting up a specified program stored in a predetermined area of the ROM 52, executes the object making process shown in the flowchart following the program.

The object making process is the one that the intending traveler makes a record during a trip as an object when he/she makes a trip according to the travel plan drafted in the planning process. When executed by the CPU 50, the object making process goes to step 600 as shown in Figure 11.

At step 600, picture data, which a digital camera connected to the portable terminal 210 has shot, is obtained. The sequence goes to step 604, where position information indicating the position of the portable terminal 210 is obtained from the position measurement device 66. Next, the sequence proceeds to step 606, where a process that relates the picture data with the position information is made. The sequence proceeds to step 608.

At step 608, input and correction such as comments are entered through the key panel 60. The sequence goes to step 610, where it is decided whether or not data showing that an object is made is entered by the key panel 60. If decided that it is (Yes), the sequence goes to step 612, where an object is made based on the picture data, position information, and comments. Then, the sequence moves to step 614.

At step 614, it is decided whether or not data showing that the content of the object is confirmed is entered via the key panel 60. If decided that it is (Yes), the sequence goes to step 616, where the object made is displayed. Then, the sequence moves to step 618.

At step 618, it is decided whether or not data showing that the object is modified is entered through the key panel 60. If decided that it is (Yes), the sequence moves back to step 608. If decided that it is not (No), the sequence moves to step 620.

At step 620, it is decided whether or not data showing that the object is printed is entered via the key panel 60. If decided that it is (Yes), the sequence proceeds to step 622, where a print format is made and the object is printed by the intending traveler terminal 200 according to the print format. Then, the sequence moves to step 624.

At step 624, it is decided whether or not data showing that the registration and publication of the object are desired is entered through the key panel 60. If decided that it is (Yes), the sequence proceeds to step 626, where the objects is sent to the planning terminal 100 with a registration request. The entire process is over and the initial process is returned to.

At step 624, it is decided that data showing that the registration and publication of the object are not desired is entered (No), the entire sequence is over and the initial process is returned to. In the case, the object is either stored in the RAM 54 or sent to the intending traveler terminal 200.

At step 620, when it is decided that data showing that the object is not printed is entered, the sequence proceeds to step 624.

At step 614, when it is decided that data showing that the content of the object is not confirmed is entered (No), or at step 610, when it is decided that data showing that the object is not made is entered (No), the sequence goes to step 620.

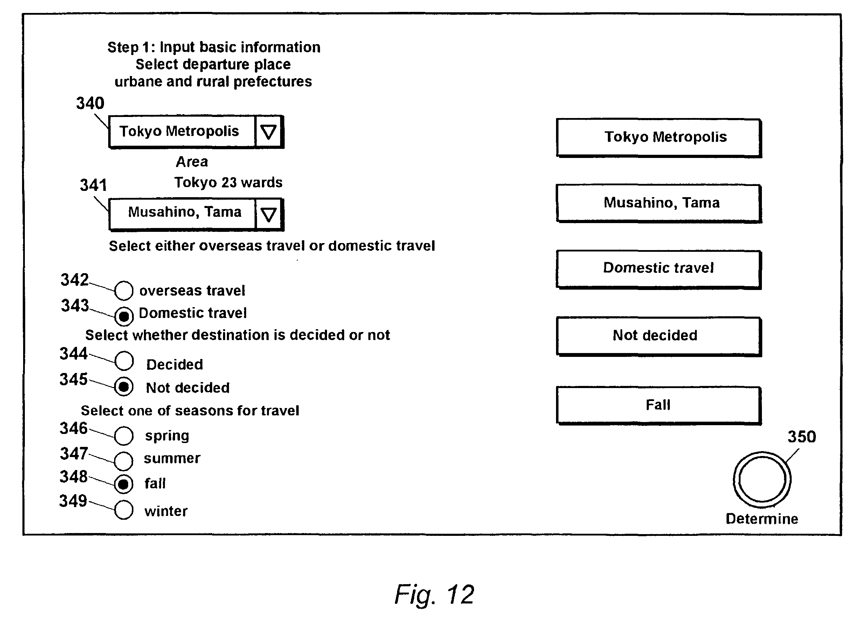

Figures 12-19 are a screen displayed by the intending traveler terminal 200. Referring to the figures, the operation of embodiments above will be described.

First, it is explained how an intending traveler makes a travel plan at the planning terminal 100.

Figure 12 is a screen for inputting basic information displayed by the intending traveler terminal 200. When the intending traveler makes a travel plan, he/she accesses the planning terminal 100 from the intending traveler terminal 200. When requesting to draft a travel plan after making a user registration, a basic information input screen is displayed as step 1 as shown in Figure 12. At step 1, basic information concerning a departure place, either a domestic travel or an overseas travel, whether a travel destination is selected or not, and in which season a trip is made is entered.

The intending traveler can select, as a departure place, "Tokyo Metropolis" of a combo box 340, where urbane and rural prefectures are registered, and then select "Musashino, Tama" of a combo box 341, where cities, towns and villages in the Tokyo Metropolis are registered. With regard to either a domestic travel or an overseas travel, a domestic travel may be selected by designating an optional button 343 for "Domestic travel" of optional buttons 342, and 343. Regarding whether a travel destination is selected or not, it may be designated that a travel destination has not been decided, by selecting an optional button 345 for "Not decided" of the optional buttons 344, and 345. Finally, as for seasons in which a trip is made, the season "fall" can be designated by selecting an optional button 348 for "Fall" of the optional buttons 345-349. When the basic information is entered completely, a button 350 for "Determine" should be clicked.

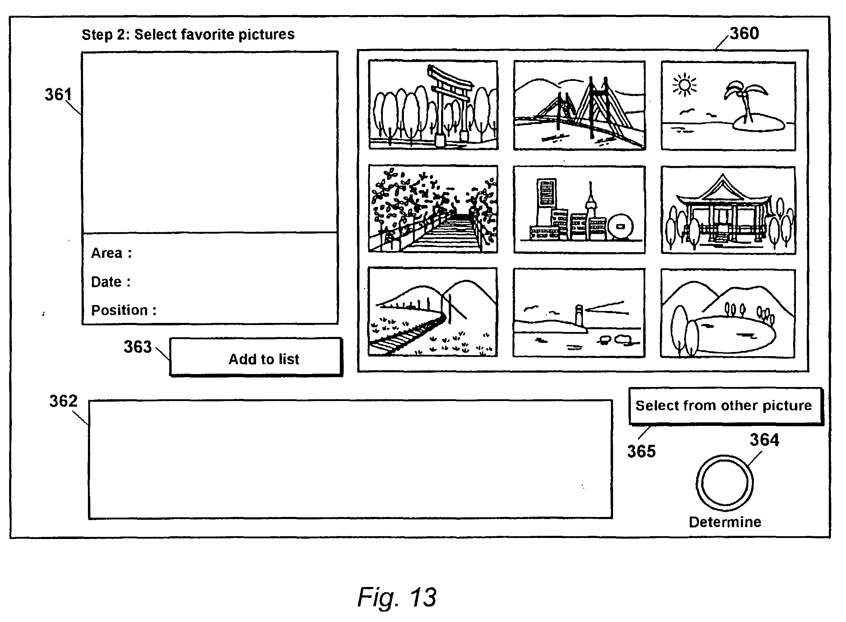

Figure 13 is a screen for selecting searched pictures displayed by the intending traveler terminal 200. When the basic information is entered at the intending traveler terminal 200, the basic information is transferred to the planning terminal 100. When the intending traveler requests an image search by pictures at the intending traveler terminal 200, a search picture selection screen appears as step 2 as shown in Figure 13. At step 2, a search picture is selected from the planning database 112. The search picture selection screen comprises an overall window 360 that displays a group of searched pictures, a detailed window 361 that expands a searched picture, and a list box 362 that register searched pictures as a list. In addition, the search picture selection screen comprises a button 363 for "Add to list" that adds to the list box 362 a searched picture displayed in the detailed window 361, a button 364 for "Determine" that determines a searched picture in the list box 362 as a search key picture, and a button 365 for "Select from other pictures" that displays a group of the next searched pictures in the overall window 360. In Figure 13, a part of searched pictures from the planning database 112 are displayed in the overall window 360.

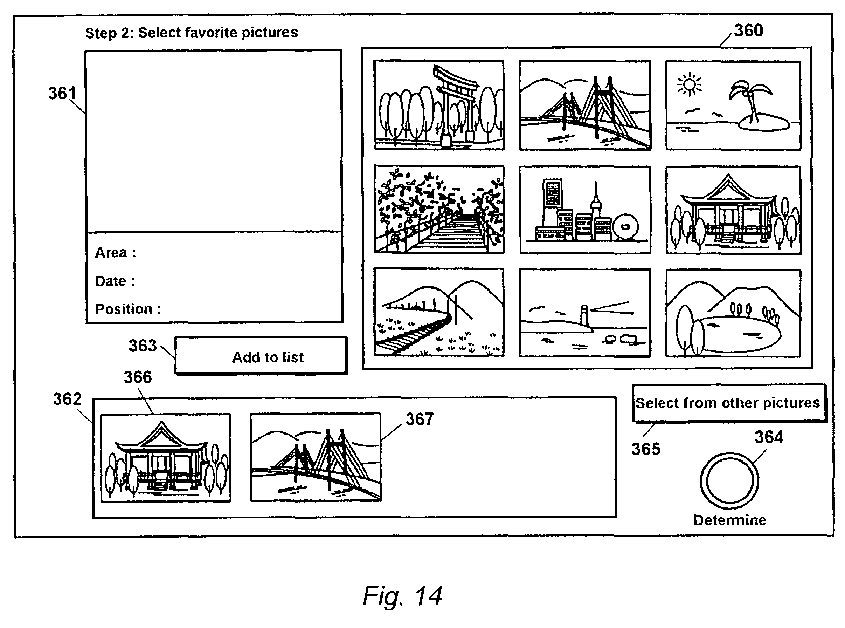

Figure 14 is a screen for selecting searched pictures displayed by the intending traveler terminal 200. The intending traveler clicks on the button 365 and displays a collection of searched pictures in the overall window 360. Referring to the collection of the windows, the intending traveler selects a searched picture similar to his/he image that will be expanded in the detailed window 361. By clicking the button 363, the searched picture is registered in the list box 362. In the example shown in Figure 13, searched pictures 366 and 367 are registered in the list box 362 by the intending traveler. The intending traveler clicks the button 364 when selection of the searched pictures is complete.

When a search key picture is input at the intending traveler terminal 200, the search key picture is transmitted to the planning terminal 100.

When the planning terminal 100 receives the search key picture, search pictures in the planning database 112 are retrieved based on the received search key picture through steps 400, 406, and 408. And then, travel destination information is found out that corresponds to the search picture appropriate for an image of the search key picture.

Location information and map information, which corresponds to the travel destination information, is sent to the intending traveler terminal 200.

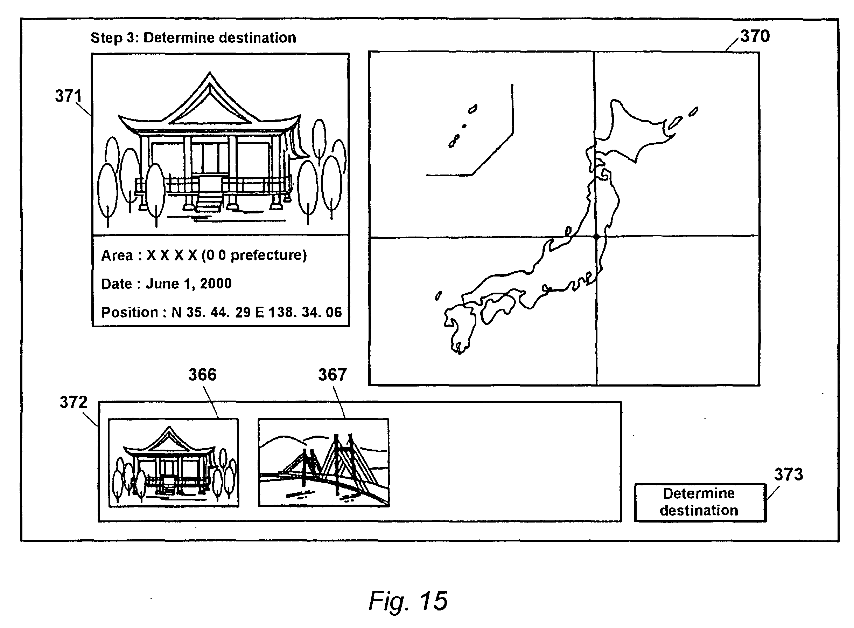

Figure 15 is a screen for determining travel destinations displayed by the intending traveler terminal 200. When the intending traveler terminal 200 receives the location information and map information, a travel destination determination screen is displayed as step 3 for drafting a travel plan as shown in Figure 15. At step 3, a desired travel destination is determined of the displayed travel destination candidates that are appropriate for an image of the search key picture entered at the step 2. The travel destination determination screen includes a map display window 370 that displays a map based on the map information, a detailed window 371 that displays detailed information of the travel destination selected of the map displayed in the map display window 370, and a list box that registers search pictures as a list. Further, the travel destination determination screen includes a button 373 for "Determine destination" that decides the travel destination displayed in the detailed window 361. In the examples in Figure 15, two travel destination candidates are displayed in the map display window 370, and one of the candidates is displayed in detail in the detailed window 371.

The intending traveler selects a travel destination of the map displayed in the map display window 370 that will be displayed in the detailed window 371. When the travel destination is fixed, the button 373 should be clicked.

When a travel destination is input in the intending traveler terminal 200, the travel destination is transferred to the planning terminal 100.

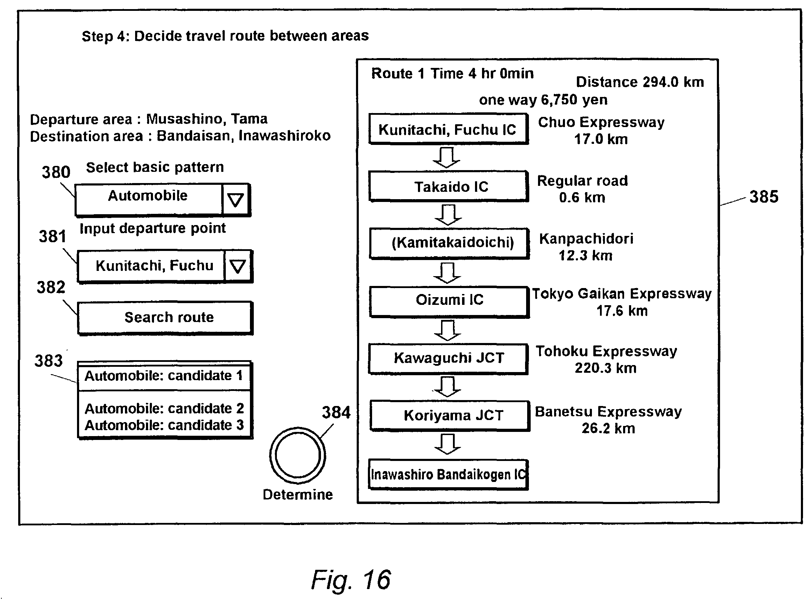

Figure 16 is a screen for determining travel routes between areas displayed by the intending traveler terminal 200. At the intending traveler terminal 200, in order to determine travel routes between areas, the screen for determining travel routes between areas is displayed as step 4 as shown in Figure 16. At step 4 entered are selection of basic patterns, departure points, and selection of travel routes.
The intending traveler selects, as a selection of a basic pattern, "Automobile" in a combo box 380 where transportation methods are registered as a list. As an input of a departure point, the intending traveler selects "Kunitachi, Fuchu" in a combo box 381 where departure points are registered as a list, and clicks a button 382 for "Search route". When clicking the button 382, the candidates for the travel route are displayed in a list box 383 and their particulars are displayed in a detailed window 385. When the intending traveler decides the travel route from the candidates displayed in the detailed window 385, he/she clicks a button 384 for "Determine".

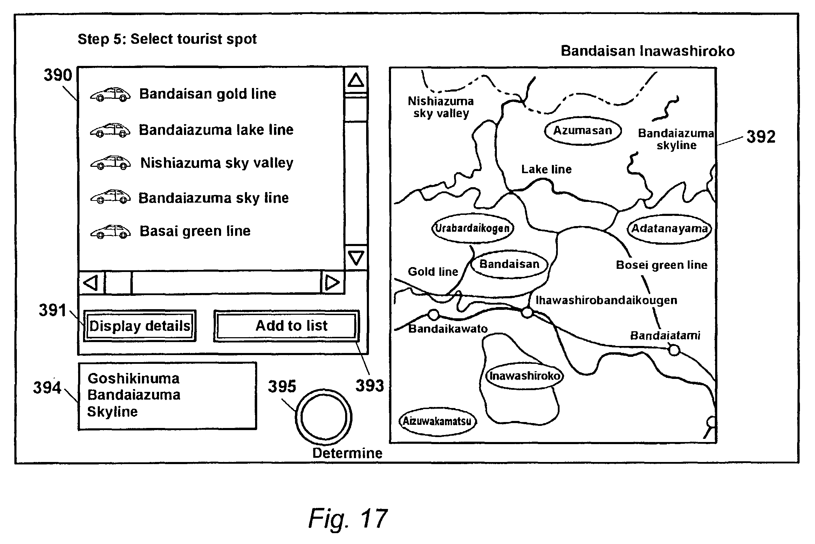

Figure 17 is a screen for determining tourist spots displayed by the intending traveler terminal 200. At the intending traveler terminal 200, in order to determine tourist spots within the areas, a tourist spot determining screen is displayed as step 5 as shown in Figure 17. At step 5, a selection of tourist spots is entered.

The intending traveler selects a tourist spot from a list box 390 where each tourist spot within an area is registered as a list, and clicks a button 391 for "Display details". With the details of the tourist spot displayed in the detailed window 392, the selected tourist spot is registered at a list box 394, by clicking a button 393 for "Add to list". When the selection of the tourist spot is complete, a button 395 for "Determine" is clicked.

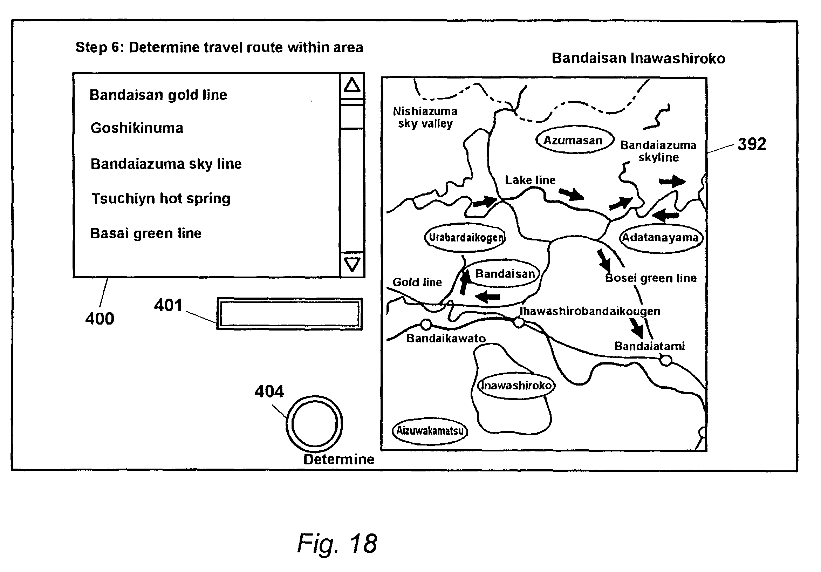

Figure 18 is a screen for determining travel routes within areas displayed by the intending traveler terminal 200. At the intending traveler terminal 200, so as to determine travel routes within an area, a travel route determining screen is displayed as step 6 as shown in Figure 18. At step 6, a selection of travel routes is entered.

The intending traveler selects a travel route from a list box 400 where each travel route within an area is registered as a list, and clicks a button 401 for "Search route". With the details of the travel route displayed in the detailed window 402, when the selection of the travel route is complete, a button 404 for "Determine" is clicked.

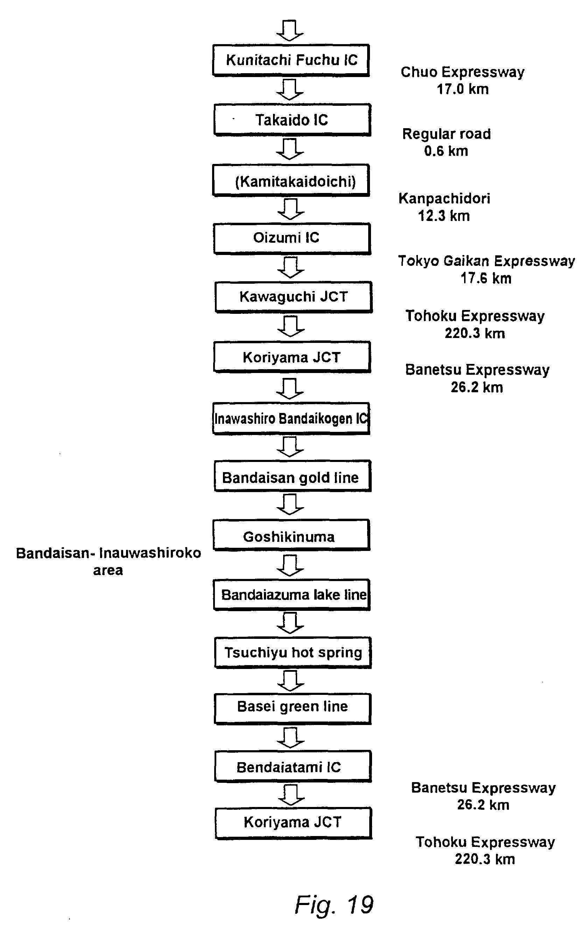

Figure 19 is a screen displayed by the intending traveler terminal 200. When information regarding step 1-6 is input, travel routes between areas, tourist spots, and travel routes within areas are displayed on a screen in time series. If the intending traveler accepts the contents displayed, he/she enters data purporting that a travel plan is drafted. When the data is entered at the intending traveler terminal 200, the data is transferred to the planning terminal 100.

When the planning terminal 100 receives the travel plan drafting data, drafted through steps 314 and 316 based on the travel destination information retrieved by the image search process is a travel plan, which is transmitted to the intending traveler terminal 200.

An explanation will be made regarding the case where the intending traveler travels according to the travel plan made at the planning terminal 100.

When present time reaches scheduled time in the travel plan at the planning terminal 100, guide information concerning a scheduled place corresponding to the scheduled time is distributed to the portable terminal 210 through steps 500 and 502. When the scheduled time has arrived at a travel destination, the intending traveler receives the guide information on the portable terminal 210 and can get information as to the scheduled place from the guide information.

The planning terminal 100 receives position information of the portable terminal 210. When a present position of the intending traveler is judged to be the scheduled place based on the position information, guide information concerning scheduled time corresponding to the scheduled place is distributed to the portable terminal 210 through steps 510 and 512. When the intending traveler has arrived at or close to the scheduled place at a travel destination, he/she receives the guide information on the portable terminal 210 and can grasp the scheduled time from the guide information.

A case where the intending traveler makes a record during his/her travel as an object will be described. When the intending traveler obtains as picture data the pictures from a digital camera connected to the portable terminal 210, the portable terminal 210 receives position information through steps 600-606, which relates the picture data to the position information. When data showing that an object is made is entered with comments, the object is made based on the picture data, position information, and comments through steps 610 and 612. When data showing that the object is registered and made public is entered, the object is sent to the planning terminal 100 with the registration request through steps 624 and 626.

When the planning terminal 100 receives the object with the registration request, the received object is registered at the planning database 112 through step 106.

In the embodiment, the planning terminal 100 comprises the planning database 112 that stores information on a plurality of travel destinations associated with a plurality of different kinds of search subjects. Based on the search key, the search subject of the planning database 112 is found out according to kinds of the search subject corresponding to the search key. The travel destination information, corresponding to the search subject related to the search key, is discovered. Based on the travel destination information, a travel plan can be made that the intending traveler thinks is best.

Since the best travel plan to the intending traveler is made, there is little room to for the intending traveler to judge. Accordingly, serviceability can be enhanced compared with the prior art. The travel destination information that corresponds to a search subject related to a search key is retrieved. Therefore, even when the concept of a travel is not determined at all, a travel plan commensurate with a certain degree of image may be made if the intending traveler enters a search key about which he/she has a vague image, for example, taking search key words such as "refreshing" or "clean".

In the embodiment, when receiving a picture as a search key, the planning terminal 100 finds a search picture of the planning database 112 based on the received search key picture, and retrieves travel destination information that corresponds to a search picture suitable for an image of the search key picture.

Thus, even when a travel concept is not determined at all, a travel plan commensurate with a certain degree of image may be made if the intending traveler enters a search key picture about which he/she has a vague image, for example, taking pictures such as "cherry blossoms" or "mountains".

In the embodiment, when receiving a voice as a search key, the planning terminal 100 finds a search voice of the planning database 112 based on the received search key voice, and retrieves travel destination information that corresponds to a search voice suitable for an image of the search key voice.

For this reason, even when a travel concept is not determined at all, a travel plan commensurate with a certain degree of image may be made if the intending traveler enters a search key voice about which he/she has a vague image, for example, taking voices such as "murmur" or "festival music".

In the embodiment, when receiving an object as a search key, the planning terminal 100 finds a search object of the planning database 112 based on the received search key object, and retrieves travel destination information that corresponds to a search object suitable for an image of the search key object.

On this account, even when a travel concept is not determined at all, a travel plan commensurate with a certain degree of image may be made if the intending traveler enters a search key object about which he/she has a vague image, for example, taking an object that contains an itinerary of a trip to the Tohoku Area or the Kyushu area.

In the embodiment, the planning terminal 100 makes a travel plan proper for the intending traveler based on the retrieved travel destination information. The reservations on accommodations and transportation necessary to the travel plan may be made by using the accommodation reservation terminal 130 and the transportation reservation terminal 140.

For this reason, since the intending traveler can save time and labor on accommodation and transportation reservations, serviceability will be more improved in making a travel plan.

In the embodiment, the planning terminal 100 obtains position information of the portable terminal 210. When it is decided based on the position information that the present position of the intending traveler is the scheduled place in the travel plan, guide information showing scheduled time corresponding to the scheduled place is sent to the portable terminal 210.

Then, when getting to or getting closer to the scheduled place in the travel plan, the intending traveler receives the guide information on the portable terminal 210, and comprehends the scheduled time from the guide information. Therefore, when the travel as planned is desired, the travel can be realized without making a big change in the travel plan. It is relatively easy to change part of the travel plan for the reason that a place to visit is newly found, and return to the original travel plan. Extensive support may be given to the intending traveler.

In the embodiment, when present time reaches the scheduled time in the travel plan, the planning terminal 100 transmits to the portable terminal 210 guide information concerning a scheduled place corresponding to the scheduled time.

Hence, when getting to the scheduled time in the travel plan, the intending traveler receives the guide information on the portable terminal 210, and comprehends the scheduled place from the guide information. Therefore, when the travel as planned is desired, the travel can be realized without making a big change in the travel plan. It is relatively easy to change part of the travel plan for the reason that a place to visit is newly found, and return to the original travel plan. An extensive support may be given to the intending traveler.

In the embodiment, the planning terminal 100 registers the received object as a search object in the planning database 112.

For this reason, when the intending traveler travels according to a travel plan and registers objects, new objects are registered consecutively to be compiled in the planning database 112. Accordingly, the variety of search subjects may be increased compared with the prior art.

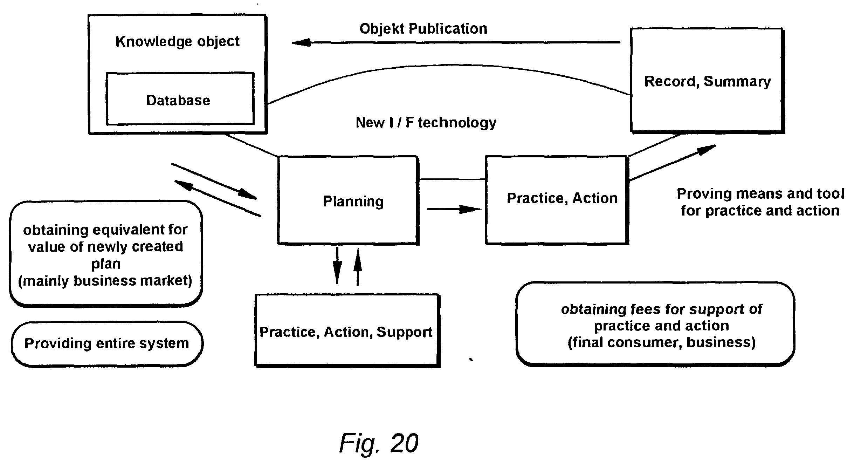

Figure 20 is a diagram showing a gradually increasing cycle of an object by the intending traveler. That is, as shown in Figure 20, a gradual increase of cycles regarding objects can be built by the intending traveler, through the repetition of planning, travel, record, and registration by the intending traveler.

The planing element information in the claims includes the travel destination information in the embodiments. The planing element information memory device and travel destination information memory device in the claims include the planning database 112. The planing element information search device and travel destination information search device in the claims include Step 304. The planning device and travel planning device in the claims include Step 316. The reservations terminal in the claims includes the accommodations reservations terminal 130 and transportation reservations terminal 140. The travel supporting device in the claims includes step 102. The object input device in the claims includes the key panel 60. The travel destination information search terminal in the claims includes the planning terminal 100.

In the embodiments, the objects made by the intending traveler are registered as a search subject in the planning database 112. However, the invention is not limited to the embodiments. The planning terminal 100 may obtain position information of the portable terminal 120, generate an object based on the position information, present time, and travel plan, and register the object as a search subject in the planning database 112.

Thus, the intending traveler travels according to a travel plan and registers an object, new objects are registered and compiled consecutively in the planning database 112. As a result,-the variety of search subjects can be increased compared with the prior art.

In the embodiments, when executing the process illustrated in the flowcharts of Figures 4-7, and 9, the control programs stored beforehand in the ROM 32 are executed. However, the invention is not restricted to the embodiments. The programs, which are stored in and read out from a memory medium, may be written into the RAM 34 for their execution.

In the embodiments, in carrying out the process shown in the flowchart of Figure 11, the control programs stored beforehand in the ROM 52 are run. However, the invention is not restricted to the embodiments. The programs, which are stored in and read out from a memory medium, may be written into the RAM 54 for their execution.

The memory media here refer to semiconductor memory media such as RAMs and ROMs, magnetic memory media such as FDs and HDs, optical memory media such as CDs, CDVs, LDs, and LDVs, and magnetic/optical memory media. As far as computers can be applicable, the memory media include any type of memory media.

In the embodiments, an explanation is made where the planning system, and travel planning system and method, and travel supporting system of the invention is applied to a network comprising the Internet 199. The invention is not limited to this, and can be applied to the so-called intranet that communicates in the same method as the Internet 199. The invention can also be applicable to not only networks that use the same method as the Internet 199 but also conventional networks.

For example, the following configuration can be considered. The Internet 199 may be connected to the planning terminal 100, intending traveler terminal 200, and portable terminal 210, while the intranet or extranet may be connected to the planning data search terminals 110, 120, accommodations reservation terminal 130, and transportation reservation terminal 140.

In the embodiments, in light of faster process and enhanced security, the planning terminal 100 is configured to be independent from the planning data search terminal 110. However, the planning terminal 100 may be combined with the planning data search terminal 110 to be one terminal.

In the embodiments shown in Figure 2, the travel planning system of the invention is applied to the case, where, in response to an access from the intending traveler terminal 200 of a plurality of travel destinations, information concerning a travel destination is retrieved that corresponds to the search subject proper for an image of a search key picture or a search key voice provided as a search key by the intending traveler, and a travel plan may be proposed to an intending traveler. The invention is not limited to this case, and can be applied to other cases without departing from the spirit of thereof. For example, the invention may be applied to the cases where commercial goods are selected or designs are made.

The sale of motor cycles is explained as one example of the selecting of goods. Users can enjoy a motor cycle by exchanging custom parts or changing coloring. When applying the planning system of the invention, retrieving picture images enables selection of option parts and coloring, and retrieving objects allows selection and extraction of using option parts according to a purpose. Accordingly, motor cycles or option parts suitable for user's image or usage can be decided. After purchase of a motor cycle and an option part, it is possible to have other users see how the motor can be used and how the option part is attached, both of which are newly added to the database.

As an example of making a design, architectural design and dress design will be described. With respect to the architectural design, how the building is used and how the tenants live can be registered by objects. Retrieving various picture images and objects thereof based on data enables a designer or user to make designs suiting their images. Regarding costume design, on the other hand, since image retrieval by a computer, excelling in the ability to select texture, is useful in selecting not only style but also material. Registering objects in light of a user who uses the costume allows designs more favorable to the user. The application to the design field can be widely available to material makers, distributors and consumers as well as designers.

The one of the embodiments in accordance with the invention produces the following advantages.

The planning system of the invention provides the advantage that serviceability is improved because the system gives less room for an intending planner to decide in making plans. The planning system also provides the advantage that a plan satisfying a certain degree of image can be made even when a concept is not fixed at all.

The travel planning system of the invention provides the advantage that serviceability is improved because the system gives less room for an intending traveler to decide. The travel planning system also provides the advantage that a travel plan satisfying a certain degree of image can be made even when a concept of travel is not fixed at all.

The travel planning system of the invention provides the advantage that a travel plan satisfying a certain degree of image can be made even when a concept of travel is not fixed at all, if search key pictures are entered such as "cherry blossoms" or "mountains", about which an intending traveler has a vague idea.

The travel planning system of the invention provides the advantage that a travel plan satisfying a certain degree of image can be made even when a concept of travel is not fixed at all, if search key voices are entered such voices as "murmur" or "festival music", about which an intending traveler has a vague idea.

The travel planning system of the invention provides the advantage that a travel plan satisfying a certain degree of image can be made even when a concept of travel is not fixed at all, if search key objects are entered such objects as a travel itinerary to the Tohoku Area or a transportation to the Kyushu Area, about which an intending traveler has a vague idea.

The travel planning system of the invention provides the advantage that serviceability in making a travel plan is improved because the system enables an intending traveler to save time and labor for making reservations on accommodations or transportation.

The travel planning system of the invention provides the advantage that the system can assist a trip an intending traveler makes, because the intending traveler can make a trip according to a trip plan if he/she wishes to do so, and can make a partial change midway in an original trip plan and return again to the original trip plan if he/she finds a place he/she wants to visit during the trip.

The travel planning system of the invention provides the advantage that the system can contribute to improving the variety of search subjects, because new objects are registered and compiled consecutively in the travel destination information memory device if the intending traveler travels following a travel plan and registers objects.

The travel supporting system of the invention provides the advantage that the system can assist a trip an intending traveler makes, because the intending traveler can make a trip according to a trip plan if he/she wishes to do so, and can make a partial change midway in an original trip plan and return again to the original trip plan if he/she finds a place he/she wants to visit during the trip.

The travel planning method of the invention provides the advantage that serviceability is improved because the method gives less room for an intending traveler to decide. The travel planning method also provides the advantage that a travel plan satisfying a certain degree of image can be made even when a concept of travel is not fixed at all.

In relation to the above embodiments, the following items are disclosed.

1) A planning system for retrieving predetermined planning element information associated with given search keys from planning element information constituting elements in making plans and for proposing plans to an intending planner, the planning system comprising:
a planning element information memory device for storing the planning element-information that is associated with a plurality of different kinds of search subjects;
   a search key input device for entering the search keys;
a planning element information retrieval device for retrieving the search subjects in the planning element information memory device based on the search keys entered in the search key input device; and
a planning device for making plans most suitable for the intending planner based on the planning element information retrieved by the planning element information retrieval device,
wherein the planning element information retrieval device retrieves the search subjects in the planning element information memory device according to the kinds of the search subjects corresponding to the search keys entered at the search key input device, and derives planning element information corresponding to the search subjects related with the search keys.

According to the structure, when the intending planner enters the search keys through the search key input device in deciding a plan, the search subjects in the planning element information memory device are retrieved based on the search keys entered by the planning element information retrieval device and planning element information corresponding to the search subjects related with the search keys is derived. The plans most suitable for the intending planner are made by the planning device based on the planning element information retrieved.

Hence, because the plans most suitable for the intending planner are made, the system gives less room for an intending planner to decide in making plans and serviceability is improved. Because planning element information corresponding to the search subjects related with the search keys is derived, a plan satisfying a certain degree of image can be made even when a concept is not fixed at all if the intending planner enters search keys, such as "refreshing" or "clean" in the case of search key words, about which he/she has a vague idea.

The planing element information refers to one that constitutes information in making plans. For example, when goods or services are to be custom-made, the planing element information means one that constitutes information in making plans for the goods or services. When goods are to be designed, the planing element information means one that constitutes information in making plans for the design.

The planning device can be of any structure as far as the plans the most suitable for the intending planner are made based on the planning element information retrieved by the planning element information retrieval device. For example, the search keys are entered per each of the kinds of the search subjects for a retrieval by the planning element information retrieval device, and a plan may be made based on the retrieved planning element information. Entering one kind of the search key, a search is performed by the planning element information retrieval device, and a plan may be made based on the retrieved planning element information. In order to make a most suitable plan for the intending planner, for example, a plan is supposed to be made so that the planning element of the planning element information can be included.

The search subject includes pictures, documents, music, moving pictures, etc. That is, the invention enables a multifaceted image search using a plurality of search subject just mentioned. The same can be applicable to a travel planning system of items 2 and 15 below.

2) A travel planning system for retrieving predetermined travel destination information associated with given search keys from travel destination information on travel destinations and for proposing travel plans to an intending traveler, the travel planning system comprising:
a travel destination information memory device for storing the travel destination information that is associated with a plurality of different kinds of search subjects;
   a search key input device for entering the search keys;
a travel destination information retrieval device for retrieving the search subjects in the travel destination information memory device based on the search keys entered in the search key input device; and
a travel planning device for making travel plans most suitable for the intending traveler based on the travel destination information retrieved by the travel destination information retrieval device,
wherein the travel destination information retrieval device retrieves the search subjects in the travel destination information memory device according to the kinds of the search subjects corresponding to the search keys entered at the search key input device, and derives travel destination information corresponding to the search subjects related with the search keys.

According to the structure, when the intending traveler enters the search keys through the search key input device in deciding a travel plan, the search subjects in the travel destination information memory device are retrieved based on the search keys entered by the travel destination information retrieval device and travel destination information corresponding to the search subjects related with the search keys is derived. The plans most suitable for the intending traveler are made by the travel planning device based on the travel destination information retrieved.

Hence, because the plans most suitable for the intending traveler are made, the system gives less room for an intending traveler to decide in making travel plans and serviceability is improved. Because the travel destination information corresponding to the search subjects related with the search keys is derived, a travel plan satisfying a certain degree of image can be made even when a concept of travel is not fixed at all if the intending traveler enters search keys, such as "refreshing" or "clean" in the case of search key words, about which he/she has a vague idea.

The travel planning device can be of any structure as far as the plans the most suitable for the intending traveler are made based on the travel destination information retrieved by the travel destination information retrieval device. For example, the search keys are entered per each of the kinds of the search subjects for a retrieval by the travel destination information retrieval device, and a plan may be made based on the retrieved travel destination information. Entering one kind of the search key, a search is performed by the travel destination information retrieval device, and a plan may be made based on the retrieved travel destination information. In order to make a most suitable plan for the intending traveler, for example, a travel plan is supposed to be made so that the travel destination of the travel destination information can be included. This can be applied to the travel planning system in item 15 below.

3) The travel planning system of Item 2, wherein the plurality of different kinds of search subjects includes search pictures as one kind, and when the pictures are entered as the search keys via the search key input device, the travel destination information retrieval device retrieves search pictures in the travel destination information memory device based on the search key pictures entered and derives travel destination information corresponding to search pictures fit for an image of the search key pictures.

According to the structure, when the intending traveler enters the pictures through the search key input device in deciding a travel plan, the search pictures in the travel destination information memory device are retrieved based on the search key pictures entered by the travel destination information retrieval device and travel destination information corresponding to the search pictures fit for an image of the search key pictures is derived.

Hence, because the travel destination information corresponding to the search pictures fit for an image of the search key pictures is derived, a travel plan satisfying a certain degree of image can be made even when a concept of travel is not fixed at all if the intending traveler enters search key pictures, such as "cherries" or "mountains", about which he/she has a vague idea.

The pictures entered as a search key may be ones that are selected from the search pictures in the travel destination information memory device, or ones that the intending traveler has prepared personally.

4) The travel planning system of Item 2 or 3, wherein the plurality of different kinds of search subjects includes search voices as one kind, and when the voices are entered as the search keys via the search key input device, the travel destination information retrieval device retrieves search voices in the travel destination information memory device based on the search key voices entered and derives travel destination information corresponding to search voices fit for an image of the search key voices.

According to the structure, when the intending traveler enters the voices through the search key input device in deciding a travel plan, the search voices in the travel destination information memory device are retrieved based on the search key voices entered by the travel destination information retrieval device and travel destination information corresponding to the search voices fit for an image of the search key voices is derived.

Hence, because the travel destination information corresponding to the search voices fit for an image of the search key voices is derived, a travel plan satisfying a certain degree of image can be made even when a concept of travel is not fixed at all if the intending traveler enters search key voices, such as "murmur" or "festival music", about which he/she has a vague idea.

The voices entered as a search key may be ones that are selected from the search voices in the travel destination information memory device, or ones that the intending traveler has prepared personally or produced. The voices include not only voices by human beings but also sound effects.

5) The travel planning system in any one of Items 2-4, wherein the plurality of different kinds of search subjects includes as one kind search objects that contain a purpose, itinerary, transportation or procedure of travel, and when the objects are entered as the search keys via the search key input device, the travel destination information retrieval device retrieves search objects in the travel destination information memory-device based on the search key objects entered and derives travel destination information corresponding to search objects fit for an image of the search key objects.

According to the structure, when the intending traveler enters the objects through the search key input device in deciding a travel plan, the search objects in the travel destination information memory device are retrieved based on the search key objects entered by the travel destination information retrieval device and travel destination information corresponding to the search objects fit for an image of the search key objects is derived.

Hence, because the travel destination information corresponding to the search objects fit for an image of the search key objects is derived, a travel plan satisfying a certain degree of image can be made even when a concept of travel is not fixed at all if the intending traveler enters search key objects, such as a travel itinerary to the Tohoku Area or a transportation to the Kyushu Area, about which he/she has a vague idea.

The objects entered as a search key may be ones that are selected from the search objects in the travel destination information memory device, or ones that the intending traveler has prepared personally.

6) The travel planning system in any one of Items 2-5, further comprising a reservation terminal for reserving accommodations or transportation, wherein the travel planning device makes a travel plan most suitable for the intending traveler based on the travel destination information retrieved by the travel destination information retrieval device and reservations for accommodations or transportation necessary for the travel plan are made by using the reservation terminal.

According to the structure, a travel plan most suitable for the intending traveler can be made by the travel planning device based on the travel destination information, and reservations for accommodations or transportation necessary for the travel plan may be made by using the reservation terminal.

By doing this, because the intending traveler can save time and labor for making reservations on accommodations or transportation, serviceability in making a travel plan is improved.

As far as reservations for accommodations or transportation necessary for the travel plan can be made by using the reservation terminal, the travel planning device may be of any structure. In view of reducing reservation mistakes, it is preferable that reservations are really made after input for the reservations or the contents of the reservations is confirmed.

7) The travel planning system in any one of Items 2-6, further comprising a portable terminal for the use of the intending traveler, and a travel supporting device for supporting the intending traveler's travel according to the travel plans made by the travel planning device, wherein the travel supporting device transfers to the portable terminal guide information on a schedule of the intending traveler based on the travel plans.

According to the structure, with regard to the intending traveler's travel following the travel plans made by the travel planning device, the portable terminal guide information on a schedule of the intending traveler is transferred to the portable terminal based on the travel plans.

Therefore, because the intending traveler can make a trip, receiving guide information through the portable terminal and referring to the information during the trip, he/she can make the trip as scheduled when he/she wishes to do so, or can make a partial change midway in an original trip plan and return again to the original trip plan if he/she finds a place he/she wants to visit during the trip. As a result, the intending traveler's trip can be assisted.

8) The travel planning system of Item 7, wherein the travel planning device makes a travel plan that contains a scheduled place the intending traveler visits and scheduled time the intending traveler arrives at the scheduled place, and the travel supporting device obtains position information that represents a position of the portable terminal, and when based on the position information deciding that a present position of the intending traveler is the scheduled place in the travel plan, transfers to the portable terminal guide information showing the scheduled time corresponding to the scheduled place.

According to the structure, when the intending traveler travels following the travel plans made by the travel planning device, the position information that represents a position of the portable terminal by the travel supporting device is obtained. Based on the position information, when it is decided that a present position of the intending traveler is the scheduled place in the travel plan, the guide information showing the scheduled time corresponding to the scheduled place is transferred to the portable terminal.

Thus, because the intending traveler can receive guide information through the portable terminal and grasp the scheduled time from the guide information near or at the scheduled place contained in the travel plan during the trip, he/she can make the trip as scheduled when he/she wishes to do so, or can make a partial change midway in an original trip plan and return again to the original trip plan if he/she finds a place he/she wants to visit during the trip. As a result, the intending traveler's trip can be assisted.

9) The travel planning system of Item 7, wherein the travel planning device makes a travel plan that contains a scheduled place the intending traveler visits and scheduled time the intending traveler arrives at the scheduled place, and the travel supporting device transfers to the portable terminal guide information on the scheduled place corresponding to the scheduled time when present time reaches the scheduled time in the travel plan.

According to the structure, when the intending traveler travels following the travel plans made by the travel planning device, the guide information on the scheduled place corresponding to the scheduled time is transferred to the portable terminal by the travel supporting device if present time reaches the scheduled time in the travel plan.

Thus, because the intending traveler can receive guide information through the portable terminal and grasp the scheduled place from the guide information at the scheduled time contained in the travel plan during the trip, he/she can make the trip as scheduled when he/she wishes to do so, or can make a partial change midway in an original trip plan and return again to the original trip plan if he/she finds a place he/she wants to visit during the trip. As a result, the intending traveler's trip can be assisted.

10) The travel planning system of any one of Items 7-9, wherein the travel supporting device obtains position information showing a position of the portable terminal, generates objects that contain a purpose, itinerary, transportation and procedure of travel, based on the position information, present time and travel plan, and registers the objects as the search subjects in the travel destination information memory device.

According to the structure, the position information showing a position of the portable terminal is obtained, objects are generated based on the position information, present time and travel plan, and the objects are registered as the search subjects in the travel destination information memory device.

Therefore, the variety of search subjects can be improved, because new objects are registered and compiled consecutively in the travel destination information memory device if the intending traveler travels following a travel plan made by the travel planning device.

11) The travel planning system in any one of Items 2-10, further comprising an object entering device for entering objects that contain a purpose, itinerary, transportation and procedure of travel, wherein the objects entered are registered as the search subjects in the travel destination information memory device.

According to the structure, when the intending traveler travels following a travel plan made by the travel planning device, the objects entered are registered as the search subjects in the travel destination information memory device if the objects are entered by the object entering device.

Hence, the variety of search subjects can be improved, because new objects are registered and compiled consecutively in the travel destination information memory device if the intending traveler travels following a travel plan made by the travel planning device and enters the objects.

12) A travel supporting system communicably connected to a portable terminal for supporting travel by an intending traveler, the travel supporting system comprising:
a travel planning device for making a travel plan; and
a travel supporting device for supporting the travel by the intending traveler that follows the travel plan made by the travel planning device,
wherein the travel supporting device transmits to the portable terminal guide information on a schedule for the intending traveler based on the travel plan.

According to the structure, a travel plan made by the travel planning device. When the intending traveler travels following the travel plan, the guide information on a schedule for the intending traveler is transmitted to the portable terminal based on the travel plan by the travel supporting device.

Hence, because the intending traveler can make a trip, receiving guide information through the portable terminal and referring to the information during the trip, he/she can make the trip as scheduled when he/she wishes to do so, or can make a partial change midway in an original trip plan and return again to the original trip plan if he/she finds a place he/she wants to visit during the trip. As a result, the intending traveler's trip can be assisted.

13) The travel supporting system of Item 12, wherein the travel planning device makes a travel plan that contains a scheduled place the intending traveler visits and scheduled time the intending traveler reaches the scheduled place, and the travel supporting device obtains position information that represents a position of the portable terminal,- and when deciding, based on the position information, that a present position of the intending traveler is the scheduled place in the travel plan, transmits to the portable terminal guide information that represents the scheduled time corresponding to the scheduled place.

According to the structure, when the intending traveler travels following the travel plan, position information that represents a position of the portable terminal is obtained by the travel supporting device. When determining, based on the position information, that a present position of the intending traveler is the scheduled place in the travel plan, guide information that represents the scheduled time corresponding to the scheduled place is transmitted to the portable terminal.

Hence, because the intending traveler can receive the guide information through the portable terminal and grasp the scheduled time from the guide information near or at the scheduled place in the travel plan during the trip, he/she can make the trip as scheduled when he/she wishes to do so, or can make a partial change midway in an original trip plan and return again to the original trip plan if he/she finds a place he/she wants to visit during the trip. As a result, the intending traveler's trip can be assisted.

14) The travel supporting system of Item 12, wherein the travel planning device makes a travel plan that contains a scheduled place the intending traveler visits and scheduled time the intending traveler reaches the scheduled place, and the travel supporting device transmits to the portable terminal guide information on the scheduled place corresponding to the scheduled time when present time reaches the scheduled time in the travel plan.

According to the structure, when the intending traveler travels following the travel plan, when present time reaches the scheduled time in the travel plan, guide information on the scheduled place corresponding to the scheduled time is transmitted to the portable terminal by the travel supporting device.

Hence, because the intending traveler can receive the guide information through the portable-terminal and grasp the scheduled place from the guide information at the scheduled time in the travel plan during the trip, he/she can make the trip as scheduled when he/she wishes to do so, or can make a partial change midway in an original trip plan and return again to the original trip plan if he/she finds a place he/she wants to visit during the trip. As a result, the intending traveler's trip can be assisted.

15) A travel planning method for proposing travel plans to an intending traveler wherein an intending traveler terminal for use by the intending traveler is communicably connected to a travel destination information search terminal that retrieves predetermined travel destination information associated with search keys from travel destination information on travel destinations, the travel planning method comprising:
entering the search keys through a search key input device; transmitting the search keys entered to the travel destination information search terminal by the intending traveler terminal, wherein the travel destination information search terminal includes:
a travel destination information memory device for storing the travel destination information that is associated with a plurality of different kinds of search subjects;
a travel destination information retrieval device for retrieving the search subjects in the travel destination information memory device based on the search keys; and
a travel planning device for making travel plans most suitable for the intending traveler based on the travel destination information retrieved by the travel destination information retrieval device;
making a travel plan by the travel planning device;
transmitting the travel plan to the intending traveler terminal;
retrieving the search subjects in the travel destination information memory device according to the kinds of the search subjects corresponding to the search keys that were received via the travel destination information retrieval device; and
deriving travel destination information corresponding to the search subjects related with the search keys.

According to the structure, when the intending traveler decides a travel plan, he/she enters search keys through the search key input device at the intending traveler terminal. When the search keys are entered, they are transmitted to the travel destination information retrieve terminal.

When the travel destination information retrieve terminal receives the search keys, search subjects in the travel destination information memory device are retrieved based on the received search keys by the travel destination information retrieval device and travel destination information is discovered that corresponds to the search subjects associated with the search keys. By the travel planning device, based on the travel destination information, a travel plan most suitable for the intending traveler is made, and the travel plan is transmitted to the intending traveler terminal.

Hence, because the plans most suitable for the intending traveler are made, the system gives less room for an intending traveler to decide in making travel plans and serviceability is improved. Because the travel destination information corresponding to the search subjects related with the search keys is derived, a travel plan satisfying a certain degree of image can be made even when a concept of travel is not fixed at all if the intending traveler enters search keys, such as "refreshing" or "clean" in the case of search key words, about which he/she has a vague idea.

The planning system, travel planning system and method, and travel supporting system are proposed. However, the following memory media can also be proposed.

The memory media store travel planning programs that retrieve travel destination information related to given search keys from travel destination information database on travel destinations and propose travel plans to an intending traveler. The memory media store programs that execute process realized by a travel destination information retrieval device for retrieving the search subjects in the travel destination information memory device based on the search keys entered in the search key input device, and a travel planning device for making travel plans most suitable for the intending traveler based on the travel destination information retrieved by the travel destination information retrieval device, with respect to a computer that includes a travel destination information memory device for storing the travel destination information which is associated with a plurality of different kinds of search subjects, and a search key input device for entering the search keys. Moreover, the memory media can read a computer, wherein the travel destination information retrieval device retrieves the search subjects in the travel destination information memory device according to the kinds of the search subjects corresponding to the search keys entered at the search key input device, and derives travel destination information corresponding to the search subjects related with the search keys

According to the structure, when the computer reads the programs stored in the memory media, and runs following the programs, the function that is same as that of the travel planning system of item 2 may be obtained.

It will be understood by those of skill in the art that numerous and various modifications can be made without departing from the spirit of the present invention. Therefore, it should be clearly understood that the forms of the present invention are illustrative only and are not intended to limit the scope of the present invention.

The embodiments provides a travel planning system that, in planning travel, enhances serviceability and variety of search subjects. The embodiment comprises a planning terminal. The planning terminal includes a planning database where information concerning a plurality of travel destinations is stored relating to a plurality of different kinds of search subjects. The planning terminal searches the search subjects in the planning database based on search keys received, depending on the kinds of the search subjects corresponding to the received search keys, searches information concerning travel destinations corresponding to the search subjects related to the search keys, and makes a travel plan which an intending travel thinks is most suitable based on the searched information. When present time reaches scheduled time in a travel plan, the planning terminal transmits to a portable terminal guide information on a scheduled place to corresponding to the scheduled time.

The embodiments mentioned above are teaching a method for making a plan to assist a user using subject information data containing multiple planning element, comprising the steps of:
(a) extracting profile parameters from each planning element of the subject information data and storing the profile parameters in a memory, said profile parameters being configured to identify planning elements;
(b) selecting by a user a search key;
(c) retrieving planning elements, if any, from the memory by comparing the profile parameters of the planning elements in the memory with the search key, wherein predetermined values of the profile parameters are assigned to the search key;
(d) displaying to the user the retrieved planning elements;
(e) repeating steps (b) through (d) until the user is satisfied with the retrieved planning elements;
(f) coordinating the retrieved planning elements to suggest a plan;
(g) displaying the suggested plan to the user; and
(h) repeating steps (e) through (g) until the user is satisfied with the suggested plan.

Said method particularly comprises the steps of:
(a1) grouping subject information into categories, said subject information containing multiple planning elements;
(a2) extracting profile parameters from each planning element of the subject information and storing the profile parameters in a memory, said profile parameters being configured to identify planning elements in each category;
(b1) selecting by a user a category from the categories;
(b2) selecting by the user a search key in the selected category;
(c) retrieving planning elements, if any, from the memory by comparing the profile parameters of the planning elements in the memory with the search key, wherein predetermined values of the profile parameters are assigned to the search key;
(d) displaying to the user the retrieved planning elements;
(e) repeating steps (b2) through (d), and optionally step (b1), until the user is satisfied with the retrieved planning elements;
(f) coordinating the retrieved planning elements to suggest a plan;
(g) displaying the suggested plan to the user; and
(h) repeating steps (e) through (g) until the user is satisfied with the suggested plan.

According to an embodiment step (d) further comprises selecting at least one planning element as a candidate, and in step (b,b2) during step (e), the profile parameters of the candidate are used as the search key. The categories include an image profile, a sound profile, a configuration profile, a geographical profile, and a motivation profile.

The memory is linked to an external database and/or the memory is updated based on the outcome of the user or users exercising the suggested plan.

According to the embodiment the plan is a travel plan, and the planning elements include at least one selected from the group consisting of scenic photographs, landmarks, weather, activities, and sound features, all of which are associated with geographical information.

The embodiments mentioned above also teaches a planning system for retrieving predetermined planning element information associated with given search keys from planning element information constituting elements in making plans and for proposing plans to an intending planner, the planning system comprising:
- a planning element information memory device for storing the planning element information that is associated with a plurality of different kinds of search subjects;
- a search key input device for entering the search keys;
- a planning element information retrieval device for retrieving the search subjects in the planning element information memory device based on the search keys entered in the search key input device; and
- a planning device for making plans most suitable for the intending planner based on the planning element information retrieved by the planning element information retrieval device,
wherein the planning element information retrieval device is provided for retrieving the search subjects in the planning element information memory device according to the kinds of the search subjects corresponding to the search keys entered at the search key input device, and for deriving planning element information corresponding to the search subjects related with the search keys.

According to a preferred embodiment, said planning system is a travel planning system for proposing travel plans to an intending traveler, said planning element information is travel destination information, said planning element information memory device is a travel destination information memory device for storing the travel destination information that is associated with a plurality of different kinds of search subjects, said planning element information retrieval device is a travel destination information retrieval device for retrieving the search subjects in the travel destination information memory device based on the search keys entered in the search key input device, and said planning device is a travel planning device for making travel plans most suitable for the intending traveler based on the travel destination information retrieved by the travel destination information retrieval device.

In said planning system, the plurality of different kinds of search subjects includes search pictures as one kind, and when the pictures are entered as the search keys via the search key input device, the planning element information retrieval device, especially the travel destination information retrieval device retrieves search pictures in the planning element information memory device, especially the travel destination information memory device based on the search key pictures entered and derives planning element information, especially travel destination information corresponding to search pictures fit for an image of the search key pictures; and/or the plurality of different kinds of search subjects includes search voices as one kind, and when the voices are entered as the search keys via the search key input device, the planning element information retrieval device, especially the travel destination information retrieval device retrieves search voices in the planning element information memory device, especially the travel destination information memory device based on the search key voices entered and derives planning element information, especially travel destination information corresponding to search voices fit for an image of the search key voices; and/or the plurality of different kinds of search subjects includes as one kind search objects that contain a purpose, itinerary, transportation or procedure of travel, and when the objects are entered as the search keys via the search key input device, the planning element information retrieval device, especially the travel destination information retrieval device retrieves search objects in the planning element information memory device, especially the travel destination information memory device based on the search key objects entered and derives planning element information, especially travel destination information corresponding to search objects fit for an image of the search key objects.

A reservation terminal is provided for reserving accommodations or transportation,
wherein the travel planning device makes a travel plan most suitable for the intending traveler based on the travel destination information retrieved by the travel destination information retrieval device and reservations for accommodations or transportation necessary for the travel plan are made by using the reservation terminal.

A portable terminal is provided for the use of the intending traveler, and a travel supporting device for supporting the intending traveler's travel according to the travel plans made by the travel planning device, wherein the travel supporting device transfers to the portable terminal guide information on a schedule of the intending traveler based on the travel plans.

The travel planning device makes a travel plan that contains a scheduled place the intending traveler visits and scheduled time the intending traveler arrives at the scheduled place, and the travel supporting device obtains position information that represents a position of the portable terminal, and when based on the position information deciding that a present position of the intending traveler is the scheduled place in the travel plan, transfers to the portable terminal guide information showing the scheduled time corresponding to the scheduled place; and/or the travel planning device makes a travel plan that contains a scheduled place the intending traveler visits and scheduled time the intending traveler arrives at the scheduled place, and the travel supporting device transfers to the portable terminal guide information on the scheduled place corresponding to the scheduled time when present time reaches the scheduled time in the travel plan.

The travel supporting device obtains position information showing a position of the portable terminal, generates objects that contain a purpose, itinerary, transportation and procedure of travel, based on the position information, present time and travel plan, and registers the objects as the search subjects in the travel destination information memory device.

An object entering device is provided for entering objects that contain a purpose, itinerary, transportation and procedure of travel, wherein the objects entered are registered as the search subjects in the travel destination information memory device.

The embodiments mentioned above also teaches a travel supporting system communicably connected to a portable terminal for supporting travel by an intending traveler, the travel supporting system comprising:
a travel planning device for making a travel plan; and
a travel supporting device for supporting the travel by the intending traveler that follows the travel plan made by the travel planning device,
wherein the travel supporting device transmits to the portable terminal guide information on a schedule for the intending traveler based on the travel plan.

The travel planning device makes a travel plan that contains a scheduled place the intending traveler visits and scheduled time the intending traveler reaches the scheduled place, and the travel supporting device obtains position information that represents a position of the portable terminal, and when deciding, based on the position information, that a present position of the intending traveler is the scheduled place in the travel plan, transmits to the portable terminal guide information that represents the scheduled time corresponding to the scheduled place; and/or the travel planning device makes a travel plan that contains a scheduled place the intending traveler visits and scheduled time the intending traveler reaches the scheduled place, and the travel supporting device transmits to the portable terminal guide information on the scheduled place corresponding to the scheduled time when present time reaches the scheduled time in the travel plan.

The embodiments mentioned above also teaches a travel planning method for proposing travel plans to an intending traveler wherein an intending traveler terminal for use by the intending traveler is communicably connected to a travel destination information search terminal that retrieves predetermined travel destination information associated with search keys from travel destination information on travel destinations, the travel planning method comprising:
entering the search keys through a search key input device;
transmitting the search keys entered to the travel destination information search terminal by the intending traveler terminal, wherein the travel destination information search terminal includes:
   - a travel destination information memory device for storing the travel destination information that is associated with a plurality of different kinds of search subjects;
   - a travel destination information retrieval device for retrieving the search subjects in the travel destination information memory device based on the search keys; and
   - a travel planning device for making travel plans most suitable for the intending traveler based on the travel destination information retrieved by the travel destination information retrieval device;
   - making a travel plan by the travel planning device;
   - transmitting the travel plan to the intending traveler terminal;
   - retrieving the search subjects in the travel destination information memory device according to the kinds of the search subjects corresponding to the search keys that were received via the travel destination information retrieval device; and
   - deriving travel destination information corresponding to the search subjects related with the search keys.

## Claims

1. Method for making a plan to assist a user using subject information data containing multiple planning element, comprising the steps of:
(a) extracting profile parameters from each planning element of the subject information data and storing the profile parameters in a memory, said profile parameters being configured to identify planning elements;
(b) selecting by a user a search key;
(c) retrieving planning elements, if any, from the memory by comparing the profile parameters of the planning elements in the memory with the search key, wherein predetermined values of the profile parameters are assigned to the search key;
(d) displaying to the user the retrieved planning elements;
(e) repeating steps (b) through (d) until the user is satisfied with the retrieved planning elements;
(f) coordinating the retrieved planning elements to suggest a plan;
(g) displaying the suggested plan to the user; and
(h) repeating steps (e) through (g) until the user is satisfied with the suggested plan.

2. Method for making a plan according to claim 1, wherein
(a1) grouping subject information into categories, said subject information containing multiple planning elements;
(a2) extracting profile parameters from each planning element of the subject information and storing the profile parameters in a memory, said profile parameters being configured to identify planning elements in each category;
(b1) selecting by a user a category from the categories;
(b2) selecting by the user a search key in the selected category;
(c) retrieving planning elements, if any, from the memory by comparing the profile parameters of the planning elements in the memory with the search key, wherein predetermined values of the profile parameters are assigned to the search key;
(d) displaying to the user the retrieved planning elements;
(e) repeating steps (b2) through (d), and optionally step (b1), until the user is satisfied with the retrieved planning elements;
(f) coordinating the retrieved planning elements to suggest a plan;
(g) displaying the suggested plan to the user; and
(h) repeating steps (e) through (g) until the user is satisfied with the suggested plan.

3. Method for making a plan according to claim 1 or 2, wherein step (d) further comprises selecting at least one planning element as a candidate, and in step (b,b2) during step (e), the profile parameters of the candidate are used as the search key.

4. Method for making a plan according to at least one of the claims 1 to 3, wherein the categories include an image profile, a sound profile, a configuration profile, a geographical profile, and a motivation profile.

5. Method for making a plan according to at least one of the claims 1 to 4, wherein the memory is linked to an external database and/or the memory is updated based on the outcome of the user or users exercising the suggested plan.

6. Method for making a plan according to at least one of the claims 1 to 5, wherein the plan is a travel plan, and the planning elements include at least one selected from the group consisting of scenic photographs, landmarks, weather, activities, and sound features, all of which are associated with geographical information.

7. Planning system for retrieving predetermined planning element information associated with given search keys from planning element information constituting elements in making plans and for proposing plans to an intending planner, the planning system comprising:
- a planning element information memory device for storing the planning element information that is associated with a plurality of different kinds of search subjects;
- a search key input device for entering the search keys;
- a planning element information retrieval device for retrieving the search subjects in the planning element information memory device based on the search keys entered in the search key input device; and
- a planning device for making plans most suitable for the intending planner based on the planning element information retrieved by the planning element information retrieval device,
wherein the planning element information retrieval device is provided for retrieving the search subjects in the planning element information memory device according to the kinds of the search subjects corresponding to the search keys entered at the search key input device, and for deriving planning element information corresponding to the search subjects related with the search keys.

8. Planning system according to claim 7, wherein said planning system is a travel planning system for proposing travel plans to an intending traveler, said planning element information is travel destination information, said planning element information memory device is a travel destination information memory device for storing the travel destination information that is associated with a plurality of different kinds of search subjects, said planning element information retrieval device is a travel destination information retrieval device for retrieving the search subjects in the travel destination information memory device based on the search keys entered in the search key input device, and said planning device is a travel planning device for making travel plans most suitable for the intending traveler based on the travel destination information retrieved by the travel destination information retrieval device.

9. Planning system according to claim 7 or 8, wherein the plurality of different kinds of search subjects includes search pictures as one kind, and when the pictures are entered as the search keys via the search key input device, the planning element information retrieval device, especially the travel destination information retrieval device retrieves search pictures in the planning element information memory device, especially the travel destination information memory device based on the search key pictures entered and derives planning element information, especially travel destination information corresponding to search pictures fit for an image of the search key pictures; and/or the plurality of different kinds of search subjects includes search voices as one kind, and when the voices are entered as the search keys via the search key input device, the planning element information retrieval device, especially the travel destination information retrieval device retrieves search voices in the planning element information memory device, especially the travel destination information memory device based on the search key voices entered and derives planning element information, especially travel destination information corresponding to search voices fit for an image of the search key voices; and/or the plurality of different kinds of search subjects includes as one kind search objects that contain a purpose, itinerary, transportation or procedure of travel, and when the objects are entered as the search keys via the search key input device, the planning element information retrieval device, especially the travel destination information retrieval device retrieves search objects in the planning element information memory device, especially the travel destination information memory device based on the search key objects entered and derives planning element information, especially travel destination information corresponding to search objects fit for an image of the search key objects.

10. Planning system according to at least one of the claims 7 to 9, wherein a reservation terminal is provided for reserving accommodations or transportation, wherein the travel planning device makes a travel plan most suitable for the intending traveler based on the travel destination information retrieved by the travel destination information retrieval device and reservations for accommodations or transportation necessary for the travel plan are made by using the reservation terminal.

11. Planning system according to at least one of the claims 7 to 10, wherein a portable terminal is provided for the use of the intending traveler, and a travel supporting device for supporting the intending traveler's travel according to the travel plans made by the travel planning device, wherein the travel supporting device transfers to the portable terminal guide information on a schedule of the intending traveler based on the travel plans.

12. Planning system according to at least one of the claims 7 to 11, wherein the travel planning device makes a travel plan that contains a scheduled place the intending traveler visits and scheduled time the intending traveler arrives at the scheduled place, and the travel supporting device obtains position information that represents a position of the portable terminal, and when based on the position information deciding that a present position of the intending traveler is the scheduled place in the travel plan, transfers to the portable terminal guide information showing the scheduled time corresponding to the scheduled place; and/or the travel planning device makes a travel plan that contains a scheduled place the intending traveler visits and scheduled time the intending traveler arrives at the scheduled place, and the travel supporting device transfers to the portable terminal guide information on the scheduled place corresponding to the scheduled time when present time reaches the scheduled time in the travel plan.

13. Planning system according to at least one of the claims 7 to 12, wherein the travel supporting device obtains position information showing a position of the portable terminal, generates objects that contain a purpose, itinerary, transportation and procedure of travel, based on the position information, present time and travel plan, and registers the objects as the search subjects in the travel destination information memory device.

14. Planning system according to at least one of the claims 7 to 13, wherein an object entering device is provided for entering objects that contain a purpose, itinerary, transportation and procedure of travel, wherein the objects entered are registered as the search subjects in the travel destination information memory device.

15. Travel supporting system communicably connected to a portable terminal for supporting travel by an intending traveler, the travel supporting system comprising:
a travel planning device for making a travel plan; and
a travel supporting device for supporting the travel by the intending traveler that follows the travel plan made by the travel planning device,
wherein the travel supporting device transmits to the portable terminal guide information on a schedule for the intending traveler based on the travel plan.

16. Travel supporting system according to claim 15, wherein the travel planning device makes a travel plan that contains a scheduled place the intending traveler visits and scheduled time the intending traveler reaches the scheduled place, and the travel supporting device obtains position information that represents a position of the portable terminal, and when deciding, based on the position information, that a present position of the intending traveler is the scheduled place in the travel plan, transmits to the portable terminal guide information that represents the scheduled time corresponding to the scheduled place; and/or the travel planning device makes a travel plan that contains a scheduled place the intending traveler visits and scheduled time the intending traveler reaches the scheduled place, and the travel supporting device transmits to the portable terminal guide information on the scheduled place corresponding to the scheduled time when present time reaches the scheduled time in the travel plan.

17. Travel planning method for proposing travel plans to an intending traveler wherein an intending traveler terminal for use by the intending traveler is communicably connected to a travel destination information search terminal that retrieves predetermined travel destination information associated with search keys from travel destination information on travel destinations, the travel planning method comprising:
entering the search keys through a search key input device;
transmitting the search keys entered to the travel destination information search terminal by the intending traveler terminal,
wherein the travel destination information search terminal includes:
- a travel destination information memory device for storing the travel destination information that is associated with a plurality of different kinds of search subjects;
- a travel destination information retrieval device for retrieving the search subjects in the travel destination information memory device based on the search keys; and
- a travel planning device for making travel plans most suitable for the intending traveler based on the travel destination information retrieved by the travel destination information retrieval device;
- making a travel plan by the travel planning device;
- transmitting the travel plan to the intending traveler terminal;
- retrieving the search subjects in the travel destination information memory device according to the kinds of the search subjects corresponding to the search keys that were received via the travel destination information retrieval device; and
- deriving travel destination information corresponding to the search subjects related with the search keys.
